# EUROPEAN PATENT APPLICATION

(11) **EP 1 143 627 A1**
(43) Date of publication of application: **10.10.2001**
(21) Application number: 00971801.6
(22) Date of filing: 06.11.2000
(51) Int. Cl.: H04B 1/04, H04B 7/26, H04L 29/08, H04M 1/00

(54) **METHOD AND DEVICE FOR DATA TRANSMISSION**

(30) Priority: 05.11.1999 JP 31588799
(71) Applicant: Sony Corporation, Tokyo 141-0001 (JP)
(72) Inventor: NAGASE, Taku c/o Sony Corporation, Shinagawa-ku, Tokyo 141-0001 (JP); TERASHIMA, Kazuhiko c/o Sony Corporation, Shinagawa-ku, Tokyo 141-0001 (JP); NATORI, Makoto c/o Sony Corporation, Shinagawa-ku, Tokyo 141-0001 (JP)
(74) Representative: Melzer, Wolfgang, Dipl.-Ing.
(86) International application number: JP0007787
(87) International publication number: WO0133722

(57) **Abstract**

A portable wireless data transmitter 1 such as portable telephone or the like includes a data transmission processing control circuit 3 which controls the transmission rate for data going to be transmitted, thermo-sensor 7 which detects the temperature inside the data transmitter 1, and a temperature monitoring circuit 8 which controls the data transmission processing control circuit 3 correspondingly to a detected temperature supplied from the thermo-sensor 7. Thus, for the data transmitter 1, the heatsinking mechanism can be simplified, enclosure be designed compact, and manufacturing cost be low.

## Description

### Technical Field

The present invention relates to a portable wireless data transmitter, and a method for wireless data transmission.

### Background Art

Recently, the portable data transmitters capable of data transmission and reception by wireless communications have been developed actively. Among others, the portable terminals or portable digital assistants (PDA) used in the portable telephone system and personal handyphone system (PHS) have rapidly become popular.

When a PDA transmits data, especially in continuous transmission of packetized data, the data have to be frequently processed for transmission. This frequent processing of data for transmission will cause the temperature in the internal circuit to rise, which in turn will elevate the internal temperature of the PDA. The processing of data for transmission will also be referred to as "data transmission processing" hereunder wherever appropriate. Data to be transmitted will also be referred as "transmission data" hereunder wherever appropriate.

When the conventional data transmitter, especially a PDA, transmits packetized data continuously, the above-mentioned elevation of the internal temperature elevation will cause the distortion during the data transmission to be larger or the gain during the data transmission to be disturbed. Thus, in the conventional PDA, the power control or the like is adversely affected by the elevation of the internal temperature.

To avoid the above, the conventional PDA has to be designed for an effective and efficient heatsinking taking in consideration that the internal temperature will be elevated when the packetized data are continuously transmitted. That is, even in case such packetized data are to be transmitted intermittently, not continuously, in many cases, the PDA should be able to withstand the internal temperature which will be elevated when the packetized data is continuously transmitted. Thus, the conventional PDA is disadvantageous in that the enclosure thereof cannot easily be designed compact and the manufacturing cost is high.

### Disclosure of the Invention

Accordingly, the present invention has an object to overcome the above-mentioned drawbacks of the prior art by providing a data transmitter, featured by a suppressed heat dissipation, simple heatsinking mechanism, compact enclosure and a low cost, and a data transmitting method effected by the data transmitter.

The above object can be attained by providing a portable wireless data transmitter including according to the present invention means for controlling processing of data for transmission, an internal temperature detecting means; and a temperature monitoring means for controlling the data transmission processing controlling means correspondingly to a detected internal temperature 1 supplied from the internal temperature detecting means.

In the above data transmitter, the data transmission processing is controlled correspondingly to an internal temperature detected by the internal temperature detecting means.

Also the above object can be attained by providing a portable wireless data transmitter including according to the present invention, a data encoding means for encoding data going to be transmitted, an internal temperature detecting; and a temperature monitoring means for controlling the data encoding means correspondingly to a detected internal temperature supplied from the internal temperature detecting means.

In the above data transmitter, the data encoding is controlled correspondingly to an internal temperature detected by the internal temperature detecting means.

Also the above object can be attained by providing a method for wireless data transmission including, according to the present invention, steps of detecting an internal temperature and controlling data transmission processing correspondingly to the detected internal temperature.

In the above data transmitting method, the data transmission processing is controlled correspondingly to a detected internal temperature.

Also the above object can be attained by providing a method for wireless data transmission including, according to the present invention, steps of encoding data going to be transmitted,detecting an internal temperature and controlling the data encoding correspondingly to the detected internal temperature.

In the above data transmitting method, the data encoding is controlled correspondingly to a detected internal temperature.

### Brief Description of the Drawings

FIG. 1 is a block diagram of a first embodiment of the data transmitter according to the present invention.
FIG. 2 is a flow chart of operations effected in the process in which the first embodiment of data transmitter in FIG. 1 is supplied with data and transmits it wirelessly.
FIGS. 3A to 3C schematically show how the data transmitter according to the present invention transmit packetized data, in which:

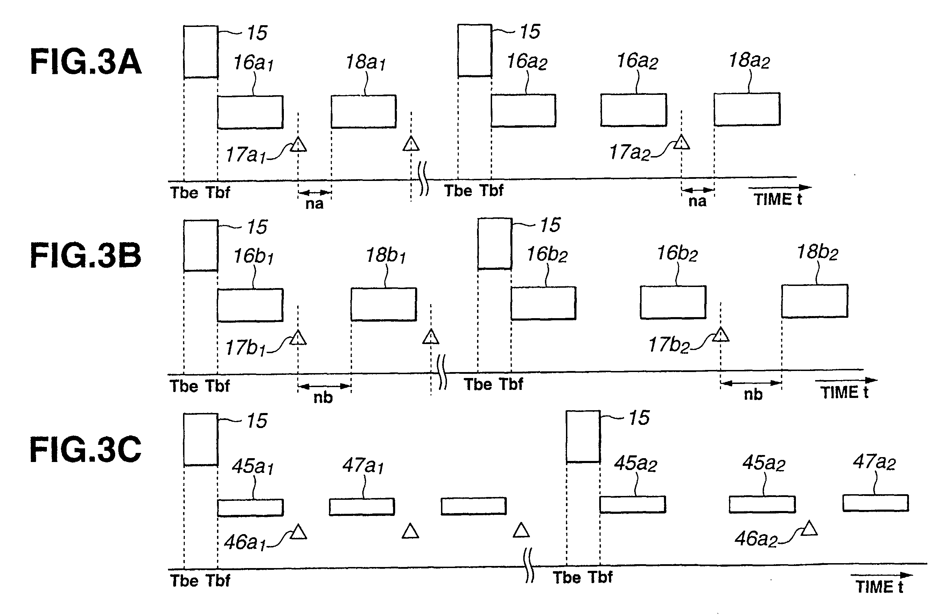

FIG. 3A shows how a data transmitter 1 transmits packetized data at the highest frequency and density;
FIG. 3B shows how the data transmitter 1 transmits packetized data at a transmitting interval determined by a temperature monitoring circuit 8; and
FIG. 3C shows how the data transmitter 40 transmits packetized data at a transmission bit rate determined by the temperature monitoring circuit 42;

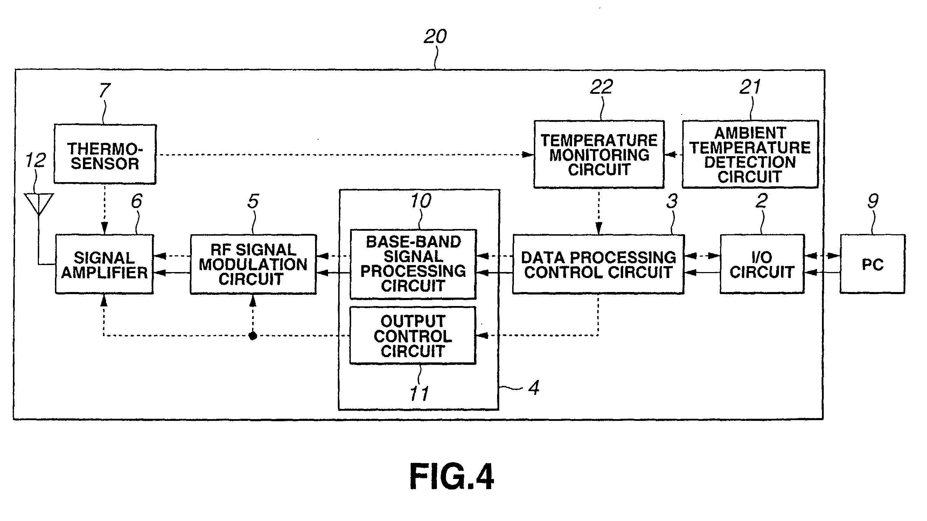

FIG. 4 is a block diagram of a second embodiment of the data transmitter according to the present invention.

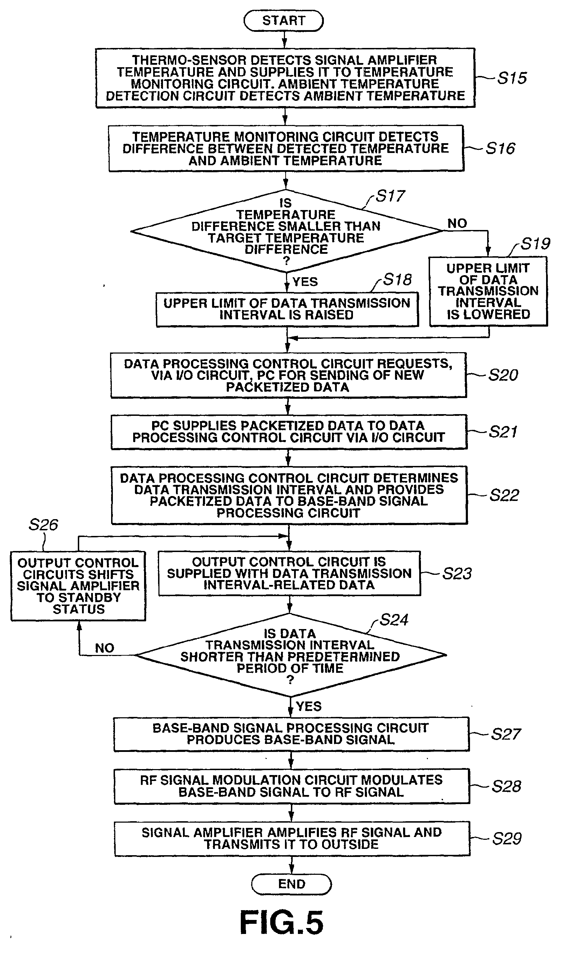

FIG. 5 is a flow chart of operations effected in the process in which the second embodiment of data transmitter in FIG. 4 is supplied with data and transmits it wirelessly.

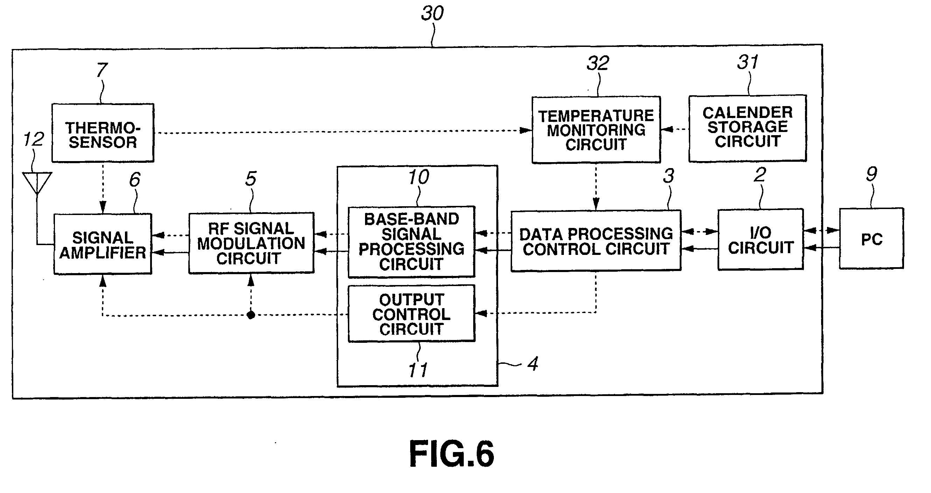

FIG. 6 is a block diagram of a third embodiment of the data transmitter according to the present invention.

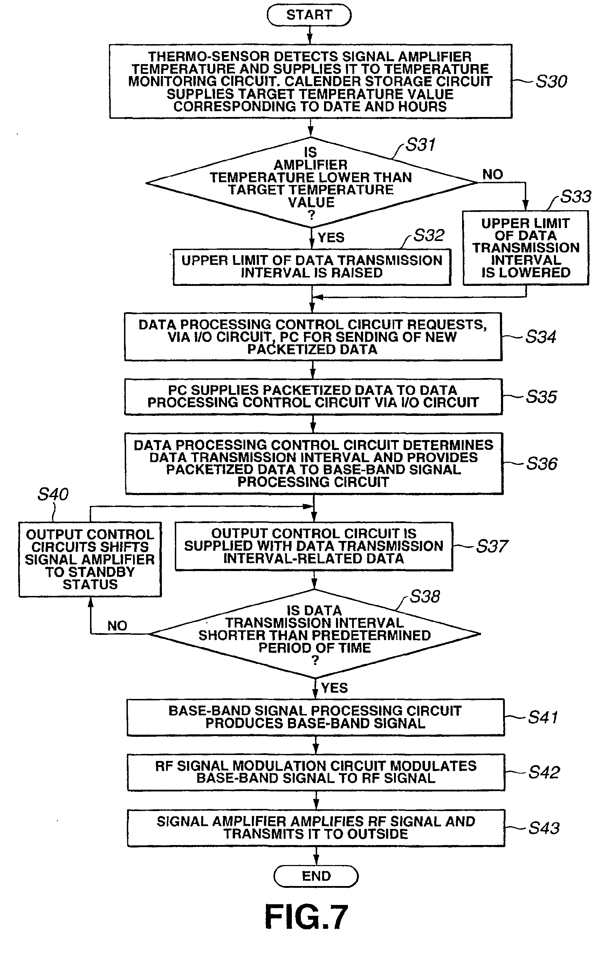

FIG. 7 is a flow chart of operations effected in the process in which the third embodiment of data transmitter in FIG. 6 is supplied with data and transmits it wirelessly.

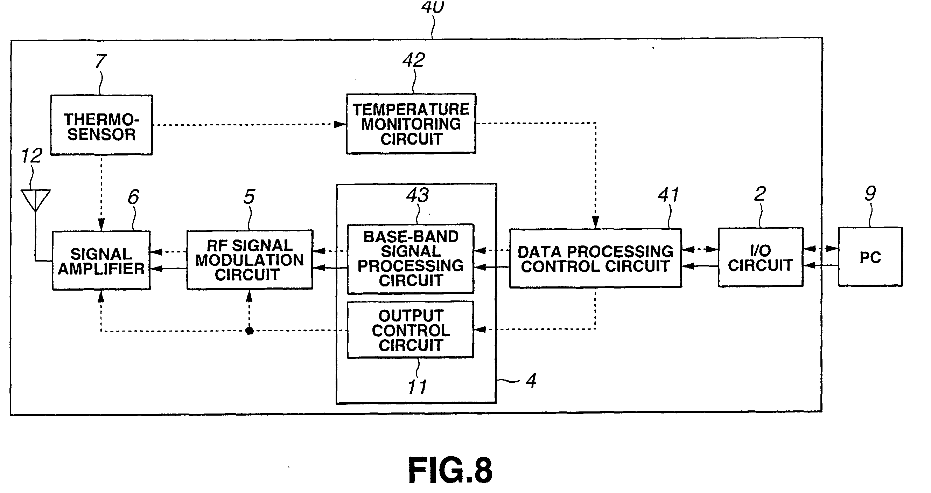

FIG. 8 is a block diagram of a fourth embodiment of the data transmitter according to the present invention.

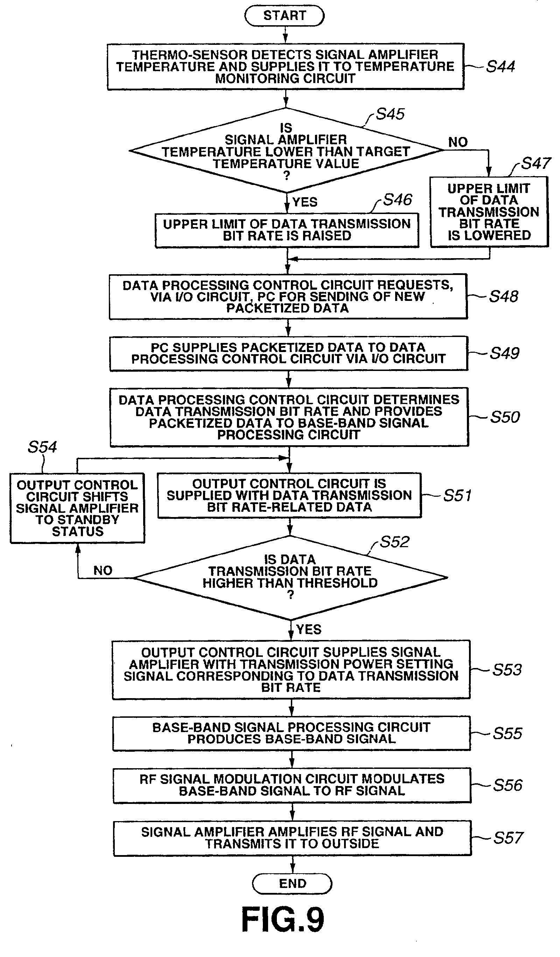

FIG. 9 is a flow chart of operations effected in the process in which the fourth embodiment of data transmitter in FIG. 8 is supplied with data and transmits it wirelessly.

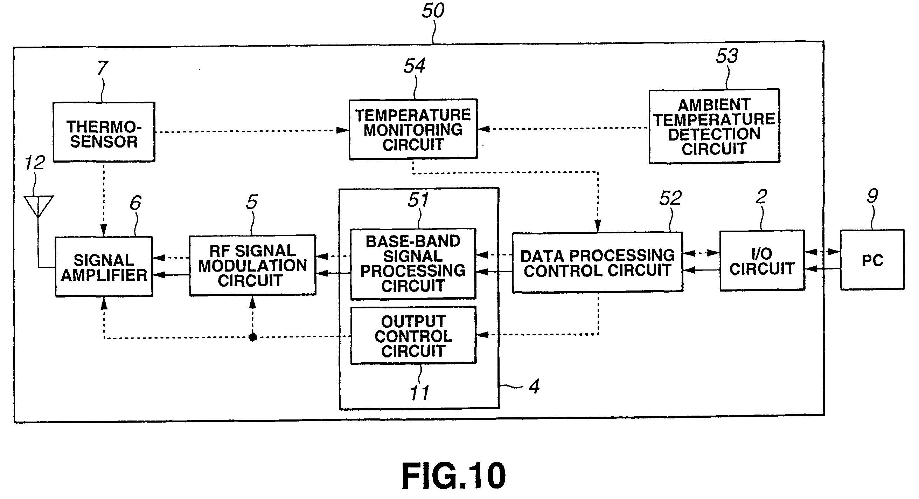

FIG. 10 is a block diagram of a fifth embodiment of the data transmitter according to the present invention.

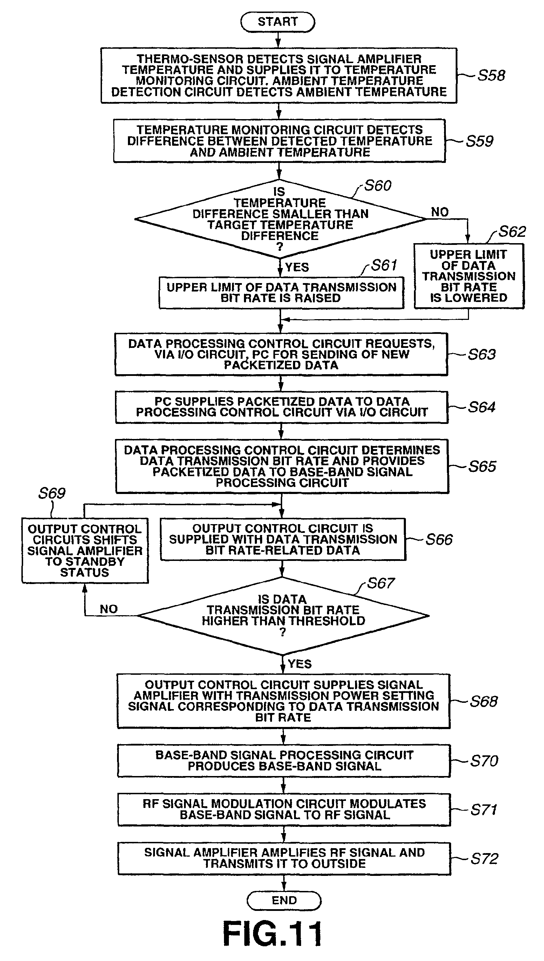

FIG. 11 is a flow chart of operations effected in the process in which the fifth embodiment of data transmitter in FIG. 10 is supplied with data and transmits it wirelessly.

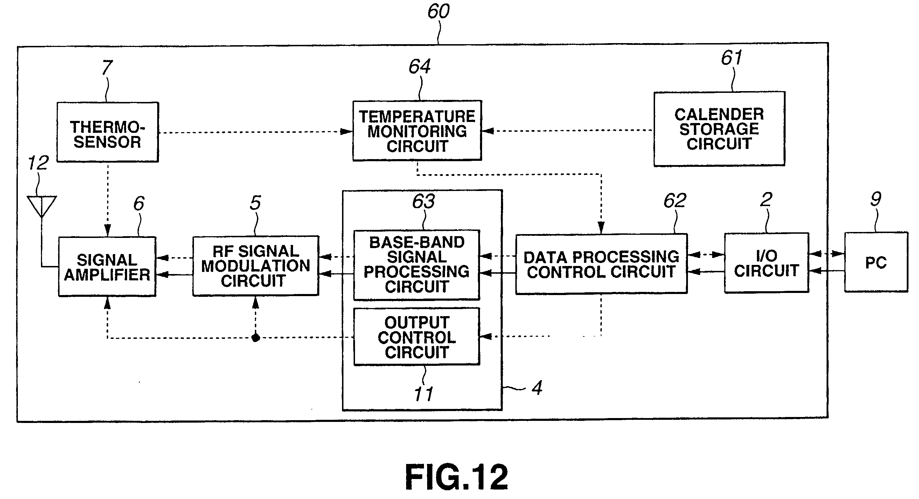

FIG. 12 is a block diagram of a sixth embodiment of the data transmitter according to the present invention.

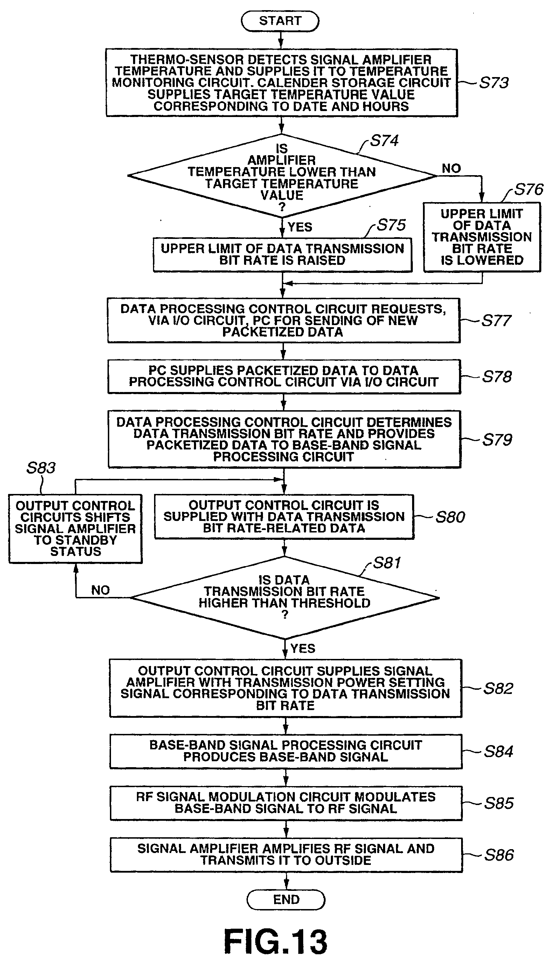

FIG. 13 is a flow chart of operations effected in the process in which the sixth embodiment of data transmitter in FIG. 12 is supplied with data and transmits it wirelessly.

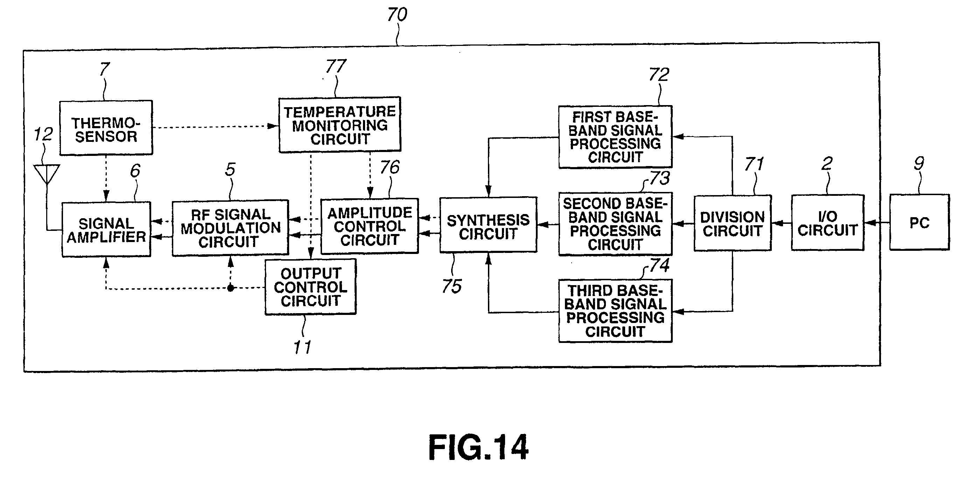

FIG. 14 is a block diagram of a seventh embodiment of the data transmitter according to the present invention.

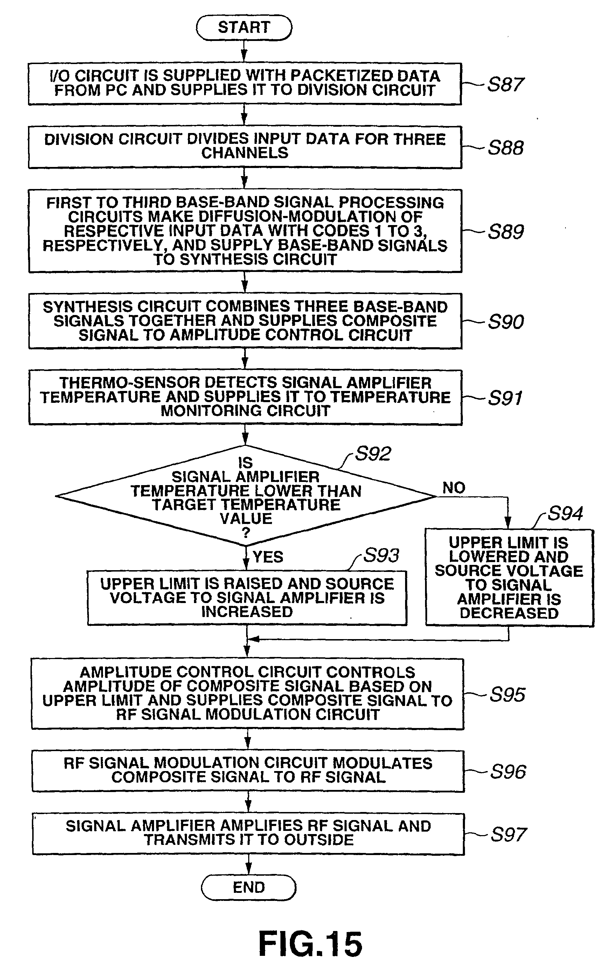

FIG. 15 is a flow chart of operations effected in the process in which the seventh embodiment of data transmitter in FIG. 14 is supplied with data and transmits it wirelessly.

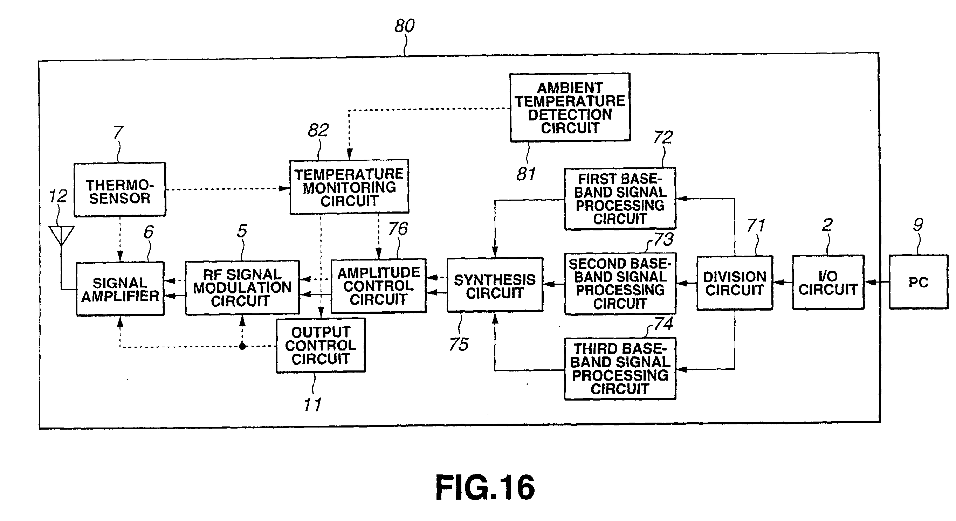

FIG. 16 is a block diagram of aan eighth embodiment of the data transmitter according to the present invention.

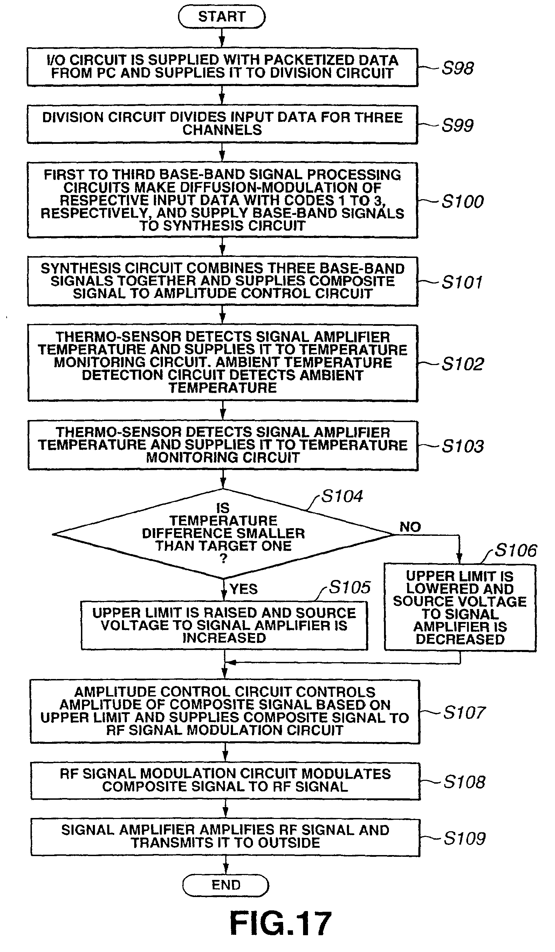

FIG. 17 is a flow chart of operations effected in the process in which the eighth embodiment of data transmitter in FIG. 16 is supplied with data and transmits it wirelessly.

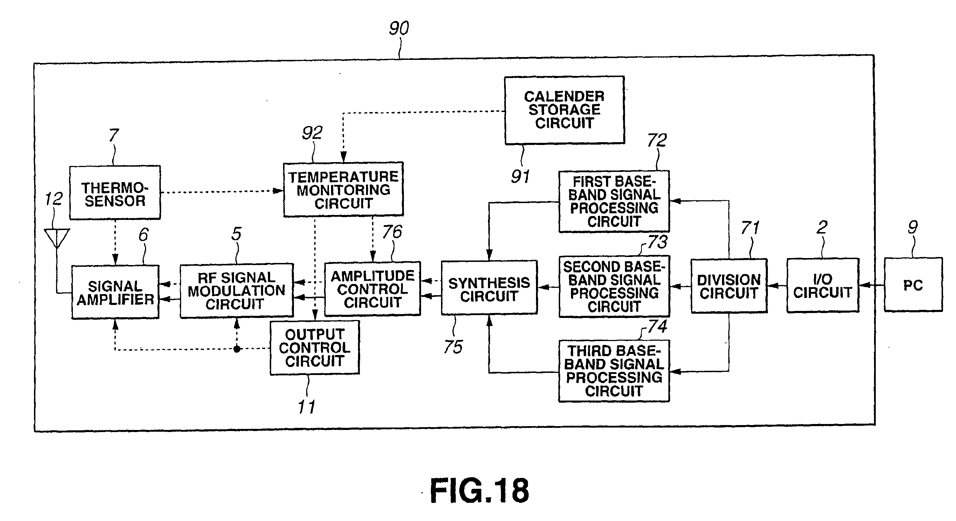

FIG. 18 is a block diagram of a ninth embodiment of the data transmitter according to the present invention.

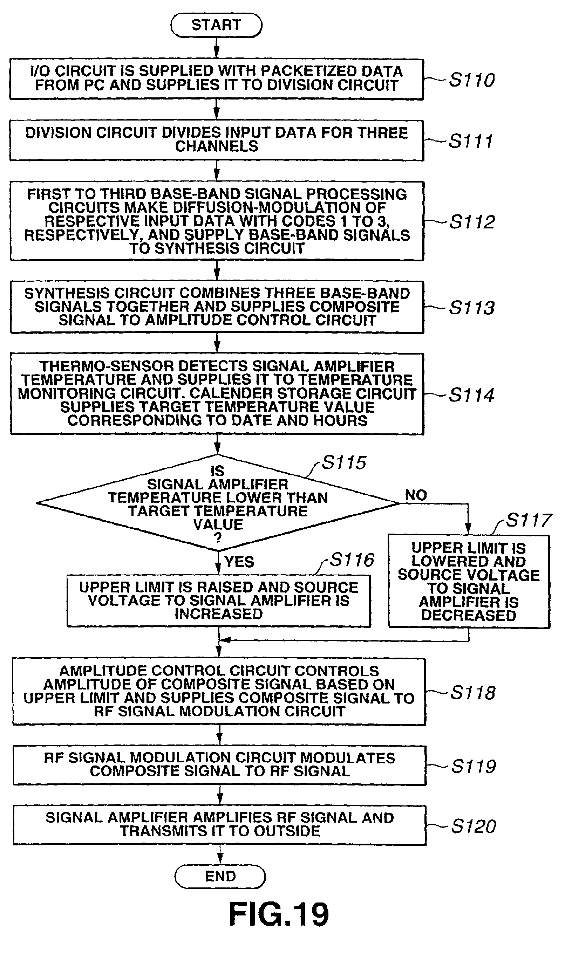

FIG. 19 is a flow chart of operations effected in the process in which the ninth embodiment of data transmitter in FIG. 18 is supplied with data and transmits it wirelessly.

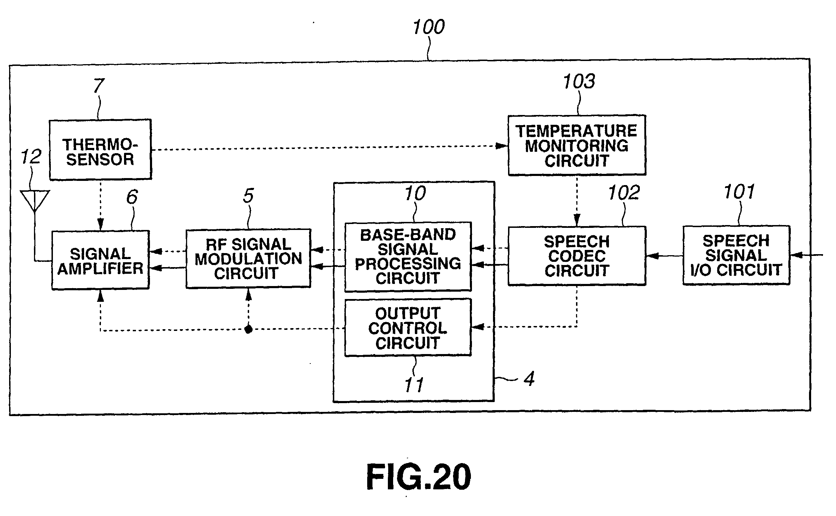

FIG. 20 is a block diagram of a tenth embodiment of the data transmitter according to the present invention.

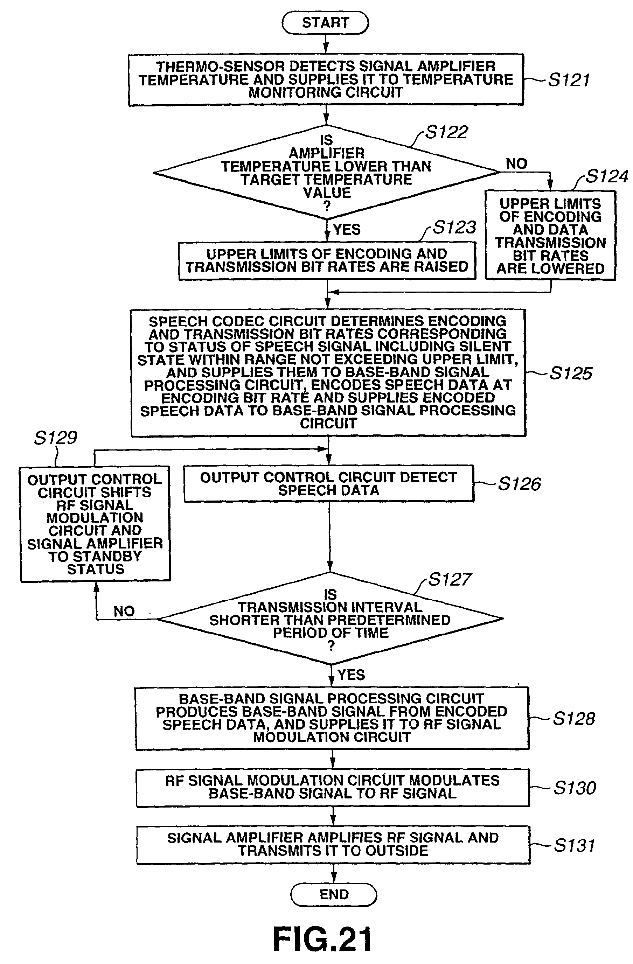

FIG. 21 is a flow chart of operations effected in the process in which the tenth embodiment of data transmitter in FIG. 20 is supplied with data and transmits it wirelessly.

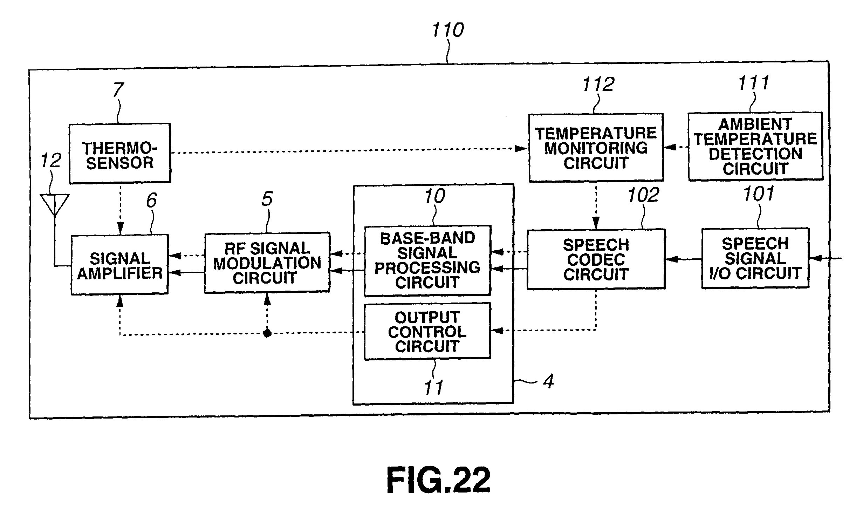

FIG. 22 is a block diagram of an eleventh embodiment of the data transmitter according to the present invention.

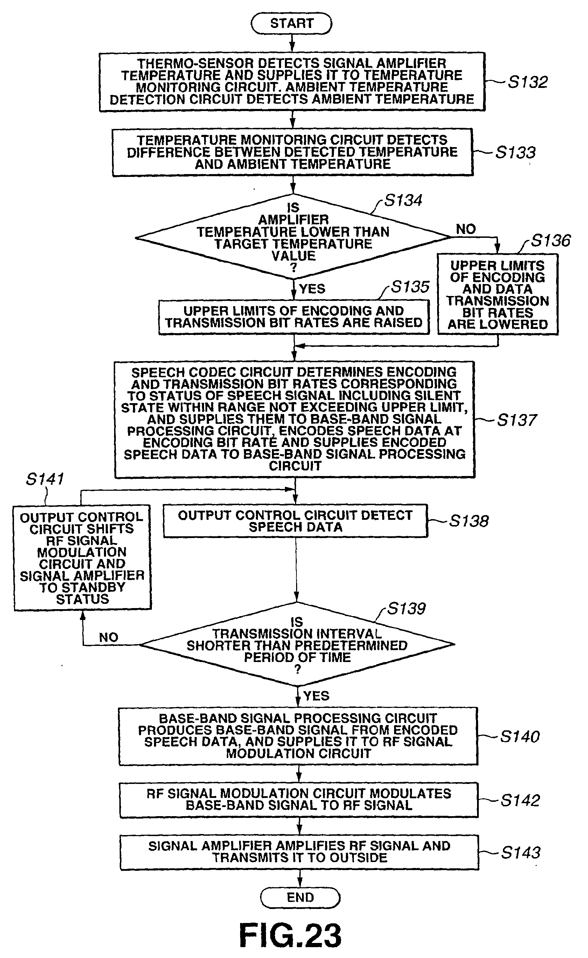

FIG. 23 is a flow chart of operations effected in the process in which the eleventh embodiment of data transmitter in FIG. 22 is supplied with data and transmits it wirelessly.

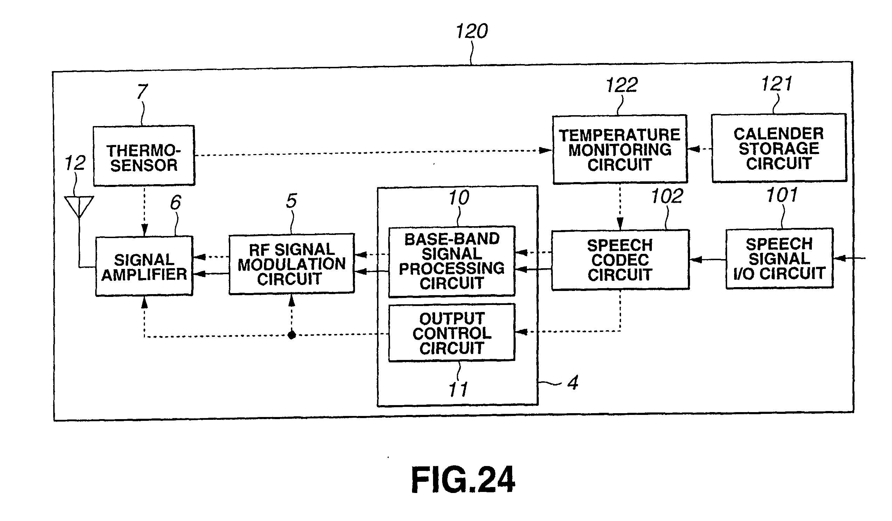

FIG. 24 is a block diagram of a twelfth embodiment of the data transmitter according to the present invention.

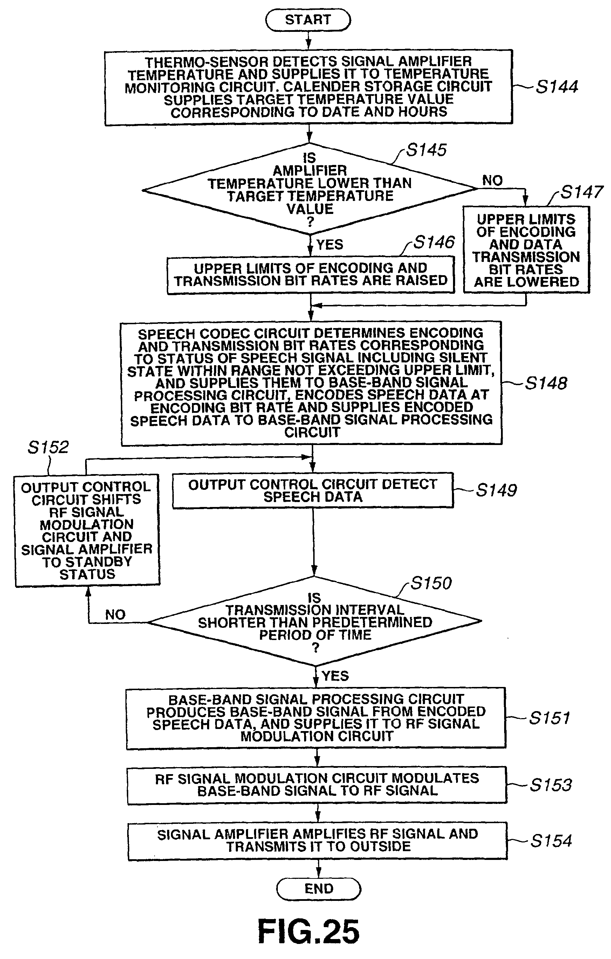

FIG. 25 is a flow chart of operations effected in the process in which the twelfth embodiment of data transmitter in FIG. 24 is supplied with data and transmits it wirelessly.

### Best Mode for Carrying Out the Invention

The embodiments of the present invention will described in detail below with reference to the accompanying drawings.

The data transmitter according to the present invention is adapted to control the data transmission processing or data encoding correspondingly to a detected source voltage. The data transmitter is a portable terminal or portable digital assistant (PDA) for example and makes wireless transmission and reception of data. Note however that the data transmitter according to the present invention will be described below concerning only the transmission system thereof and the reception system will not be described.

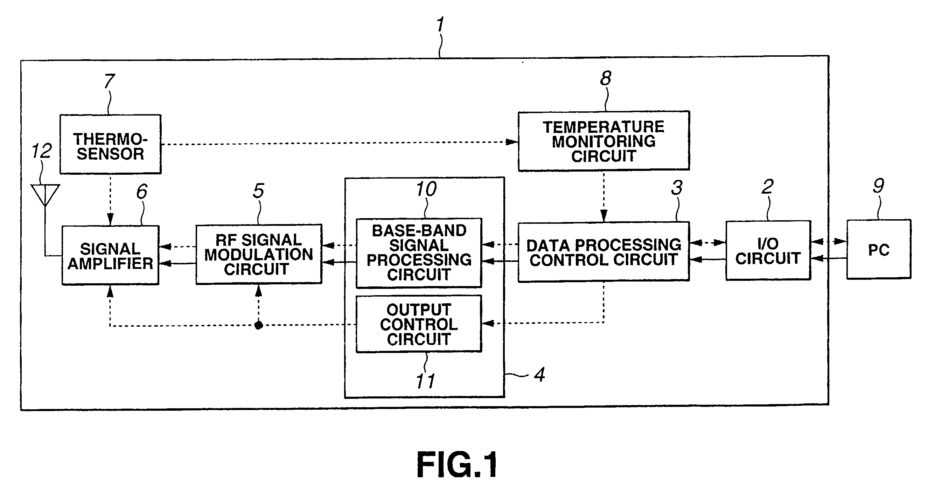

Referring now to FIG. 1, there is schematically illustrated in the form of a block diagram the first embodiment of the data transmitter according to the present invention. Note that the solid lines in FIG. 1 indicate the flow of data while the broken lines indicate the flow of control signal.

In FIG. 1, the data transmitter is generally indicated with a reference 1. The data transmitter 1 includes an input/output circuit 2, data processing control circuit 3, base-band signal processor 4, RF signal modulation circuit 5, signal amplifier 6, thermo-sensor 7 and a temperature monitoring circuit 8.

The input/output circuit 2 is supplied with a control signal from the data processing control circuit 3 and provides it to an external personal computer (PC) 9 for example. Also the input/output circuit 2 is supplied with packetized data from the PC 9 and provides it to the data processing control circuit 3. Note that the PC 9 may be provided as an internal data processing circuit of the data transmitter 1 such as a portable terminal or PDA.

The data processing control circuit 3 has provided therein a memory which stores packetized data, and controls the flow and retransmission of the packetized data while determining a data transmission interval on the basis of an upper limit of the data transmission interval, supplied from the temperature monitoring circuit 8 which will further be described later. The data processing control circuit 3 functions as will be described below:

The data processing control circuit 3 monitors the status of the internal memory thereof. When the memory becomes empty, the data processing control circuit 3 will request, via the input/output circuit 2, the data processor 11 for sending new packetized data. When the memory is filled with packetized data, the data processing control circuit 3 will provide packetized data to a base-band signal processing circuit 10. If the data processing control circuit 3 fails to send the packetized data, it will retransmit the same packetized data to the base-band signal processing circuit 10. When the data processing control circuit 3 succeeds in sending the packetized data, it will request, via the input/output circuit 2, the data processor 11 for sending new packetized data, and store, into the internal memory thereof, the new packetized data received from the data processor 11.

Also, the data processing control circuit 3 controls flow and re-transmission of packetized data so that the packetized data will be provided to the base-band signal processing circuit 10 at a data transmission interval falling within a range not exceeding an upper limit of data transmission interval supplied from the temperature monitoring circuit 8.

Note that in this embodiment, the data processing control circuit 3 controls the packetized data transmission interval on the basis of data on the upper limit of the data transmission interval supplied from the temperature monitoring circuit 8 but temperature data itself may be supplied to control the packetized data transmission interval. More specifically, a data request command, ready command or the like sent from the data processing control circuit 3 to the PC 9 via the input/output circuit 2 may be controlled correspondingly to the temperature data, whereby data sent to the data processing control circuit 3 from the PC 9 via the input/output circuit 2 may adjusted to control the packetized data transmission interval.

The base-band signal processor 4 includes the base-band signal processing circuit 10 and an output control circuit 11. The base-band signal processing circuit 10 produces a base-band signal from the data supplied from the data processing control circuit 3, and supplies it to the RF signal modulation circuit 5.

According to a value indicative of an upper limit of the data transmission interval supplied from the data processing control circuit 3, the output control circuit 11 supplies the RF signal modulation circuit 5 which will further be described later and signal amplifier 6 with a signal for checking the data processing status correspondingly to the data transmission interval. For example, when the data transmission interval supplied from the data processing control circuit 3 exceeds a predetermined period of time or when there is no packetized data to be transmitted, the output control circuit 11 will provide a signal which shifts the signal amplifier 6 to a power-saving status in which the signal amplifier 6 will be bypassed or supplied with no power.

The RF signal modulation circuit 5 modulates a base-band signal supplied from the base-band signal processing circuit 10 to produce an RF (radio frequency) signal for transmission on a carrier wave. The RF signal modulation circuit 5 supplies an RF signal to the signal amplifier 6.

Also, the RF signal modulation circuit 5 is supplied, from the output control circuit 11, with a signal for changing the status of modulation of the base-band signal to an RF signal, and it will modulate the base-band signal to RF signal according to the signal.

The signal amplifier 6 amplifies the RF signal supplied from the RF signal modulation circuit 5. Also, the signal amplifier 6 is supplied, from the output control circuit 11, with a signal for changing the status of amplification of the RF signal. The signal amplifier 6 provides an amplification according to the signal. The amplified RF signal is wirelessly transmitted to outside via the antenna 12.

The thenno-sensor 7 detects the temperature of the signal amplifier 6, converts the detected temperature to an electric signal, and supplies the electric signal to the temperature monitoring circuit 8.

The temperature monitoring circuit 8 compares the detected temperature supplied from the thermo-sensor 7 with a pre-stored target temperature value to determine an upper limit of the data transmission interval. That is, when the temperature supplied from the thermo-sensor 7 is lower than the target temperature value, the temperature monitoring circuit 8 will raise the upper limit of the data transmission interval. When the temperature supplied from the thermo-sensor 7 is higher than the target temperature value, the temperature monitoring circuit 8 will lower the upper limit of the data transmission interval, Thus, the temperature monitoring circuit 8 determines an upper limit and supplies it to the data processing control circuit 3.

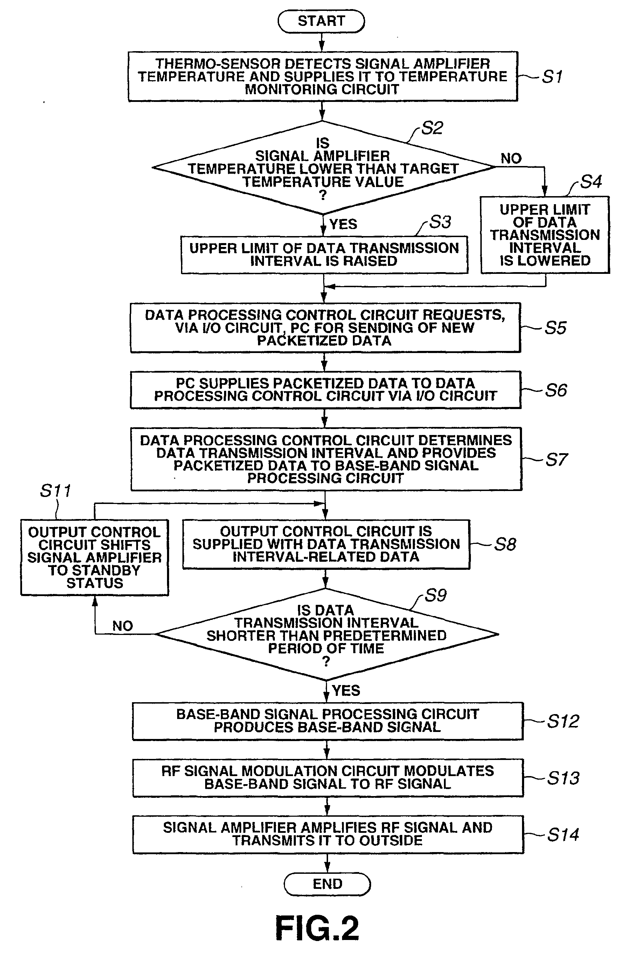

In the data transmitter 1 constructed as having been described in the foregoing, input data will be transmitted wirelessly through a series of steps as shown in the flow chart in FIG. 2.

First at step S1 shown in FIG. 2, the thermo-sensor 7 detects the temperature of the signal amplifier 6, converts it to an electric signal, and supplies the electric signal to the temperature monitoring circuit 8.

At step S2, the temperature monitoring circuit 8 judges whether a voltage value indicated by the electric signal supplied from the thermo-sensor 7 is lower than a pre-stored target temperature value. If the temperature value indicated by the electric signal is judged to be lower than the target temperature value, the temperature monitoring circuit 8 goes to step S3 where it will raise the upper limit of the data transmission interval. On the contrary, if the temperature value indicated by the electric signal is higher than the target temperature value, the temperature monitoring circuit 8 goes to step S4 where it will lower the upper limit of the data transmission interval. The data processing control circuit 3 will be supplied with a control signal indicative of the upper limit of data transmission interval determined by the temperature monitoring circuit 8.

At step S5, the data processing control circuit 3 requests, via the input/output circuit 2, the PC 9 for sending a new packetized data.

At step S6, based on the data sending request, the PC 9 sends a packetized data to the data processing control circuit 3 via the input/output circuit 2.

At step S7, the data processing control circuit 3 determines a data transmission interval within a range not exceeding the above upper limit, and provides the packetized data to the base-band signal processing circuit 10 at the data transmission interval.

Next at step S8, the output control circuit 11 is supplied with data on the data transmission interval, supplied from the data processing control circuit 3.

At step S9, the output control circuit 11 judges whether the data transmission interval indicated by the signal is within a predetermined period of time. If the packetized data are transmitted within the predetermined period of time, the output control circuit 11 goes to step S12. On the contrary, if the data transmission interval is longer than the predetermined period of time or if there is no packetized data to be transmitted, the output control circuit 11 will shift, at step S11, the signal amplifier 6 to a standby status in which the signal amplifier 6 will be supplied with no power.

Next at step S12, the base-band signal processing circuit 10 produces a base-band signal from data supplied from the data processing control circuit 3, and supplies it to the RF signal modulation circuit 5.

Next at step S13, the RF signal modulation circuit 5 modulates the base-band signal supplied from the base-band processing circuit 10 to produce an RF signal which will be transmitted on a carrier wave.

At step S 14, the signal amplifier 6 amplifies the RF signal supplied from the RF signal modulation circuit 5, and wirelessly transmits the amplified RF signal via the antenna 12.

As in the foregoing, in the data transmitter 1, the upper limit of the packetized data transmission interval is controlled such that the detected temperature of the signal amplifier 6 will not exceed the preset target temperature value. Thus, the data transmitter 1 is controlled for the temperature of the signal amplifier 6 not to be higher than the target temperature value. Therefore, the data transmitter 1 may not be designed to suppress the maximum heat dissipation and the heatsinking mechanism can thus be simplified. Thus the data transmitter 1 can have the enclosure thereof designed more compact and lightweight and can be manufactured with less costs.

In the data transmitter 1, the packetized data are wirelessly transmitted as shown in FIGS. 3A and 3B. FIG. 3A shows how the data transmitter 1 transmits packetized data at a highest frequency and density, while FIG. 3B shows how the data transmitter 1 transmits packetized data at a certain transmission interval determined by the temperature monitoring circuit 8.

In FIGS. 3A and 3B, a reference Tbₑ indicates a status in which a buffer 15 provided in the data processing control circuit 3 is empty or blank while a reference Tb_{f} indicates a status in which the buffer 15 is full.

For transmission of packetized data at the highest frequency, the data processing control circuit 3 will supply packetized data to the base-band signal processing circuit 10 at a transmission interval not exceeding a maximum transmission interval determined by the temperature monitoring circuit 8, as shown in FIG. 3A.

Namely, when the buffer 15 provided in the data processing control circuit 3 is full, the data processing control circuit 3 will packetize data and output it as a packetized data 16a₁. After receiving the packetized data 16a₁, a data transmitter 1 (not shown) at the receiving side sends ACK (acknowledgment) 17a₁ to the data transmitter 1 at the transmitting side. The data transmitter 1 sends the packetized data 16a₁, and supplies a next packetized data 18a₁ to the input/output circuit in a period of time nₐ after it receives the ACK 17a₁ from the receiving-side data transmitter.

When the data transmitter 1 receives no ACK 17a₂ for packetized data 16a₂ from the receiving-side data transmitter, the data transmitter 1 will repeatedly send the packetized data 16a₂ until it receives the ACK 17a2. After receiving the ACK 17a₂, the data transmitter 1 will supply next packetized data 18a₂ to the input/output circuit in the period of time na.

On the other hand, when transmitting data at a certain transmission interval n_{b} not exceeding the upper limit determined by the temperature monitoring circuit 8, the data transmitter 1 transmits the packetized data 16b₁ and receives the ACK 17b₁ from the receiving-side data transmitter, and then transmits a next packetized data 18b₁ in the period of time n_{b} from the reception of the ACK 17b₁.

In this case, if the data transmitter 1 receives no ACK 17b₂ for the packetized data 16b₂ from the receiving-side data transmitter, it will repeatedly re-transmit the packetized data 16b₂ until it receives the ACK 17b₂. Upon reception of the ACK 17b₂, the data transmitter 1 supplies the input/output circuit with the next packetized data 18b₂ in the period of time n_{b}, as shown in FIG. 3B.

Next, the second embodiment of the data transmitter according to the present invention will be described with reference to FIGS. 4 and 5.

In FIG. 4, the second embodiment of the data transmitter is generally indicated with a reference 20. The data transmitter 20 is basically similar in construction to the data transmitter 1 according to the first embodiment of the present invention, having been described in the above with reference to FIG. 1, except that there is provided an ambient temperature detection circuit 21 to detect the ambient temperature of the data transmitter 20. Therefore, the same or similar elements included in the data transmitter 20 as or to those in the data transmitter 1 are indicated in FIG. 4 with the same or similar references as or to those in FIG. 1, and will not be described in detail below. Note that the solid lines in FIG. 4 indicate the flow of data while the broken lines indicate the flow of control signal.

As shown in FIG. 4, the data transmitter 20 includes an input/output circuit 2, data processing control circuit 3, base-band signal processor 4, RF signal modulation circuit 5, signal amplifier 6, thermo-sensor 7, antenna 12, ambient temperature detection circuit 21, and a temperature monitoring circuit 22.

The ambient temperature detection circuit 21 is provided to detect the ambient temperature of the data transmitter 20, converts the detected ambient temperature to an electric signal and supplies the electric signal to the temperature monitoring circuit 22.

The temperature monitoring circuit 22 is provided to compares a difference between a detected temperature supplied from the thermo-sensor 7 and an ambient temperature detected by the ambient temperature detection circuit 21, with a pre-stored target temperature difference to determine an upper limit of the data transmission interval. That is, if the difference between the detected temperature supplied from the thermo-sensor 7 and ambient temperature detected by the ambient temperature detection circuit 21 is smaller than the target temperature difference, the temperature monitoring circuit 22 will raise the upper limit of the data transmission interval. On the contrary, if the temperature difference is larger than the target one, the temperature monitoring circuit 22 lowers the upper limit of the data transmission interval. Thus, the temperature monitoring circuit 22 supplies the data processing control circuit 3 with a control signal indicative of the determined data transmission interval upper limit.

In the data transmitter 20 constructed as having been described in the foregoing, input data will be transmitted wirelessly through a series of steps as shown in the flow chart in FIG. 5.

First at step S15 shown in FIG. 5 the thermo-sensor 7 detects the temperature of the signal amplifier 6, converts it to an electric signal, and supplies it to the temperature monitoring circuit 22. Also, the ambient temperature detection circuit 21 detects the ambient temperature of the data transmitter 20, converts the detected ambient temperature to an electric signal, and supplies the electric signal to the temperature monitoring circuit 22.

At step S 16, the temperature monitoring circuit 22 detects a difference between the detected temperature indicated by the electric signal supplied from the thenno-sensor 7 and the ambient temperature indicated by the electric signal supplied from the ambient temperature detection circuit 21.

At step S17, the temperature monitoring circuit 22 judges whether the temperature difference is smaller than the pre-stored target temperature difference. If the temperature difference is smaller than the target one, the temperature monitoring circuit 22 goes to step S18 where it will raise the upper limit of the data transmission interval. On the contrary, if the temperature difference is larger than the target one, the temperature monitoring circuit 22 goes to step S19 where it will lower the upper limit of the data transmission interval.

At step S20, the data processing control circuit 3 requests, via the input/output circuit 2, the PC 9 for sending a new packetized data.

At step S21, the PC 9 sends a packetized data to the data processing control circuit 3 via the input/output circuit 2 on the basis of the data sending request signal.

At step S22, the data processing control circuit 3 determines a data transmission interval within a range not exceeding the upper limit, and provides the packetized data to the base-band signal processing circuit 10 at the data transmission interval.

Next at step S23, the output control circuit 11 is supplied with data on the data transmission interval supplied from the data processing control circuit 3.

At step S24, the output control circuit 11 judges whether the packetized data transmission interval is within a predetermined period of time. If the packetized data is transmitted within the predetermined period of time, the output control circuit 11 goes to step S26. On the contrary, if the packetized data is transmitted at a data transmission interval longer than the predetermined period of time or if there is no packetized data to be transmitted, the output control circuit 11 shifts, at step S26, the signal amplifier 6 to a standby status in which the signal amplifier 6 will be supplied with no power.

Next at step S27, the base-band signal processing circuit 10 encodes data supplied from the data processing control circuit 3 to a base-band signal, and supplies the base-band signal to the RF signal modulation circuit 5.

At step S28, the RF signal modulation circuit 5 modulates the base-band signal supplied from the base-band processing circuit 10 to produce an RF signal which will be transmitted on a carrier wave.

At step S29, the signal amplifier 6 amplifies the RF signal supplied from the RF signal modulation circuit 5, and wirelessly transmits the amplified RF signal via the antenna 12.

As in the foregoing, in the data transmitter 20, the transmission interval for the packetized data is controlled so that the difference between the temperature of the signal amplifier 6 and ambient temperature will not exceed a preset target temperature difference. Thus, in the data transmitter 20, the difference between the ambient and internal temperatures is controlled not to exceed the target temperature difference. Therefore, in the data transmitter 20, the heatsinking mechanism and thenno-controlling mechanism can be designed simple and the internal temperature can be kept at an appropriate level correspondingly to the ambient temperature. Also, the enclosure of the data transmitter 20 can be designed compact and lightweight and the data transmitter 20 can be manufactured with less costs.

Next, the third embodiment of the data transmitter according to the present invention will be described with reference to FIGS. 6 and 7.

As shown in FIG. 6, the data transmitter according to the third embodiment is generally indicated with a reference 30. The data transmitter 30 is basically similar in construction to the data transmitter 1 according to the first embodiment of the present invention, having been described in the above with reference to FIG. 1, except that it includes a calender storage circuit 31 which stores a target temperature value corresponding to a data and hours. Note that the same or similar elements included in the data transmitter 30 as or to those in the data transmitter 1 are indicated in FIG. 6 with the same or similar references as or to those in FIG. 1, and will not be described in detail below. Note that the solid lines in FIG. 6 indicate the flow of data while the broken lines indicate the flow of control signal.

As shown in FIG. 6, the data transmitter 30 includes an input/output circuit 2, data processing control circuit 3, base-base signal processor 4, RF signal modulation circuit 5, signal amplifier 6, thermo-sensor 7, antenna 12, calender storage circuit 31 and a temperature monitoring circuit 32.

The calender storage circuit 31 stores a target temperature value corresponding to a date and hours, and selects a current target temperature value correspondingly to a current date and hours, and supplies it to the temperature monitoring circuit 32.

The temperature monitoring circuit 32 compares a detected temperature value indicated by an electric signal supplied from the thermo-sensor 7 with a pre-stored target temperature value selected by the calender storage circuit 31 to determine an upper limit of the data transmission interval. That is, when the detected temperature value indicated by the electric signal supplied from the thermo-sensor 7 is lower than the target temperature value selected by the calender storage circuit 31, the temperature monitoring circuit 32 raises the upper limit of the data transmission interval. When the detected temperature value indicated by the electric signal supplied from the thermo-sensor 7 is higher than the target temperature value, the temperature monitoring circuit 32 lowers the upper limit of the data transmission interval. Thus, the temperature monitoring circuit 32 determines an upper limit of the data transmission interval, and supplies the data processing control circuit 2 with a control signal indicative of the determined upper limit.

In the data transmitter 30 constructed as having been described in the foregoing, input data will be transmitted wirelessly through a series of steps as shown in the flow chart in FIG. 7.

Fist at step S30 in FIG. 7, the thermo-sensor 7 detects the temperature of the signal amplifier 6, converts the detected temperature to an electric signal and supplies the electric signal to the temperature monitoring circuit 32, The calender storage circuit 31 supplies the temperature monitoring circuit 32 with a target temperature value corresponding to a date and hours.

At step S31, the temperature monitoring circuit 32 judges whether the temperature value indicated by the electric signal supplied from the thermo-sensor 7 is lower than a target temperature value stored in the calender storage circuit 31 and selected correspondingly to the date and hours. If the temperature value indicated by the electric signal is lower than the target one, the temperature monitoring circuit 32 goes to step S32 where it will raise the upper limit of the data transmission interval. On the contrary, if the temperature value indicated by the electric signal is higher than the target one, the temperature monitoring circuit 32 goes to step S33 where it will lower the upper limit of the data transmission interval.

At step S34, the data processing control circuit 3 requests, via the input/output circuit 2, the PC 9 for sending a new packetized data.

At step S35, the PC 9 sends a packetized data to the data processing control circuit 3 via the input/output circuit 2 on the basis of the data sending request signal.

At step S36, the data processing control circuit 3 determines a data transmission interval within a range not exceeding the upper limit, and provides the packetized data to the base-band signal processing circuit 10 at the data transmission interval.

Next at step S37, the output control circuit 11 is supplied with data on the data transmission interval supplied from the data processing control circuit 3.

At step S38, the output control circuit 11 judges whether the packetized data is transmitted at a transmission interval shorter than a predetermined period of time. If the packetized data is transmitted within the predetermined period of time, the output control circuit 11 goes to step S41. On the contrary, if the packetized data is transmitted at a data transmission interval longer than the predetermined period of time, the output control circuit 11 shifts, at step S40, the signal amplifier 6 to a standby status in which the signal amplifier 6 will be supplied with no power.

Next at step S41, the base-band signal processing circuit 10 encodes data supplied from the data processing control circuit 3 to a base-band signal, and supplies the base-band signal to the RF signal modulation circuit 5.

At step S42, the RF signal modulation circuit 5 modulates the base-band signal supplied from the base-band processing circuit 10 to produce an RF signal which will be transmitted on a carrier wave.

At step S43, the signal amplifier 6 amplifies the RF signal supplied from the RF signal modulation circuit 5, and wirelessly transmits the amplified RF signal via the antenna 12.

As in the foregoing, in the data transmitter 30, the transmission interval for the packetized data is controlled so that the temperature of the signal amplifier 6 will not exceed a target temperature value selected correspondingly to a date and hours. Thus, in the data transmitter 30, the internal temperature is controlled not to exceed a target temperature value determined correspondingly to the data and hours. Therefore, in the data transmitter 30, the heatsinking mechanism and thermo-controlling mechanism can be designed simple and the internal temperature can be kept at an appropriate level correspondingly to the date and hours. Also, the enclosure of the data transmitter 30 can be designed compact and lightweight and the data transmitter 30 can be manufactured with less costs.

Next, the fourth embodiment of the data transmitter according to the present invention will be described with reference to FIG. 8. As shown, the data transmitter is generally indicated with a reference 40. The data transmitter 40 is basically similar in construction to the data transmitter 1 according to the first embodiment of the present invention, having been described in the above with reference to FIG. 1, except that a data processing control circuit 41 controls a data transmission bit rate according to a value indicative of the upper limit of a data transmission bit rate supplied from a temperature monitoring circuit 42. Therefore, the same or similar elements included in the data transmitter 40 as or to those in the data transmitter 1 are indicated in FIG. 8 with the same or similar references as or to those in FIG. 1, and will not be described in detail below. Note that the solid lines in FIG. 8 indicate the flow of data while the broken lines indicate the flow of control signal.

As shown in FIG. 8, the data transmitter 40 includes an input/output circuit 2, base-band signal processor 4, RF signal modulation circuit 5, signal amplifier 6, thermo-sensor 7, antenna 12, data processing control circuit 41, and a temperature monitoring circuit 42. The base-band signal processor 4 includes a base-band signal processing circuit 43 and output control circuit 11.

The data processing control circuit 41 is supplied with a control signal from the temperature monitoring circuit 42 and supplies it to the PC 9. The data processing control circuit 41 is supplied with data packetized by the PC 9 via the input/output circuit 2.

The base-base signal processor 4 includes a base-band signal processing circuit 43 and output control circuit 11. The base-band signal processing circuit 43 is supplied with a control circuit from the temperature monitoring circuit 42 which will further be described later, and supplies the control signal to the data processing control circuit 41. The base-base signal processing circuit 43 encodes data supplied from the data processing control circuit 41 to a base-band signal, and supplies the base-band signal to the RF signal modulation circuit 5.

The temperature monitoring circuit 42 compares a detected signal indicated by an electric signal supplied from the thermo-sensor 7 with a pre-stored target temperature value to determine an upper limit of the data transmission bit rate. More specifically, if a temperature supplied from the thermo-sensor 7 is lower than a target temperature value, the temperature monitoring circuit 42 raises the upper limit of the data transmission bit rate. On the contrary, if the temperature from the thermo-sensor 7 is higher than the target one, the temperature monitoring circuit 42 lowers the upper limit of the data transmission bit rate. Thus, the temperature monitoring circuit 42 determines an upper limit of the data transmission bit rate, and supplies a control signal indicative of the determined upper limit of the data transmission bit rate to the base-band signal processing circuit 43.

Generally, in case of a data transmission based on the CDMA (code division multiple access) method, when it is effected at a half of the transmission bit rate for example, the energy per unit bit will be double, so the error rate will be the same even with a half of the transmission power. Therefore, the lower the transmission bit rate, the smaller the necessary transmission power for the same error rate will be.

In the data transmitter 40 constructed as having been described in the foregoing, input data will be transmitted wirelessly through a series of steps as shown in the flow chart in FIG. 9.

First at step S44 shown in FIG. 9, the thermo-sensor 7 detects the temperature of the signal amplifier 6, converts it to an electric signal, and supplies the electric signal to the temperature monitoring circuit 42 .

At step S45, the temperature monitoring circuit 42 judges whether a temperature value indicated by the electric signal supplied from the thermo-sensor 7 is lower than a pre-stored target temperature value. If the temperature value indicated by the electric signal is lower than the target one, the temperature monitoring circuit 42 goes to step S46 where it will raise the upper limit of the data transmission bit rate. On the contrary, if the temperature value indicated by the electric signal is higher than the. target one, the temperature monitoring circuit 42 goes to step S47 where it will lower the upper limit of the data transmission bit rate.

At step S48, the data processing control circuit 41 requests, via the input/output circuit 2, the PC 9 for sending a new packetized data.

At step S49, the PC 9 provides packetized data to the data processing control circuit 41 via the input/output circuit 2.

At step S50, the data processing control circuit 41 determines a data transmission bit rate, informs the base-band signal processing circuit 43 of the determined transmitted bit rate, and provides packetized data to the base-band signal processing circuit 43.

Next at step S51, the output control circuit 11 is supplied with data on the data transmission bit rate supplied from the data processing control circuit 41.

The output control circuit 11 judges, at step S52, whether the transmission bit rate for the packetized data is higher or lower than a certain threshold. If the momentary transmission bit rate is judged as being higher than the threshold, the output control circuit 11 supplies, at step S53, the signal amplifier 6 with a signal for changing the output power correspondingly to the momentary transmission bit rate for the packetized data. On the contrary, if the packetized data transmission bit rate is reduced, the output control circuit 11 supplies the signal amplifier 6 with a signal for reducing the output power.

On the contrary, if the data transmission bit rate is lower than the threshold, the output control circuit 11 shifts, at step S54, the signal amplifier 6 to a standby status in which the signal amplifier 6 will be supplied with no power.

Next at step S55, the base-band signal processing circuit 43 produces a base-band signal from the packetized data supplied from the data processing control circuit 41, and supplies it to the RF signal modulation circuit 5.

At step S56, the RF signal modulation circuit 5 modulates the base-band signal supplied from the base-band processing circuit 10 to produce an RF signal which will be transmitted on a carrier wave.

At step S57, the signal amplifier 6 amplifies the RF signal supplied from the RF signal modulation circuit 5, and wirelessly transmits the amplified RF signal via the antenna 12.

The data transmitter 40 transmits packetized data wirelessly as shown in FIGS. 3A and 3C. FIG. 3C shows how the data transmitter 40 transmits packetized data at a transmission bit rate determined by the temperature monitoring circuit 42. In FIG. 3, a reference Tbₑ indicates a status in which a buffer 15 provided in the data processing control circuit 41 is empty or blank while a reference Tb_{f} indicates a status in which the buffer 15 is full.

For transmission of packetized data at the highest frequency and density, when the data processing control circuit 41 is supplied with a control signal indicative of a maximum data transmission bit rate determined by the temperature monitoring circuit 42 , it will provide data packetized according to the control signal, as shown in FIG. 3A.

For the data transmitter 40 to transmit data at a transmission bit rate determined by the temperature monitoring circuit 42, the data processing control circuit 41 is supplied with a control signal indicative of the data transmission bit rate upper limit determined by the temperature monitoring circuit 42, determines a data transmission bit rate within a range not exceeding the upper limit of the data transmission bit rate, informs the base-band signal processing circuit 43 of the determined data transmission bit rate, and provides packetized data to the base-band signal processing circuit 43, as will be seen from FIG. 3C. The data transmitter 40 sends the packetized data 45a₁ to a receiving-side data transmitter (not shown). After receiving ACK 46a₁ from the receiving-side data transmitter, the data transmitter 40 sends a next packetized data 47a₁.

In this case, if the data transmitter 40 receives no ACK 46a₂ for packetized data 45a₂ from the receiving-side data transmitter, it will repeatedly re-transmit the packetized data 45a₂ until it receives ACK 46a₂. Upon reception of the ACK 46a₂, the data transmitter 40 will transmit a next packetized data 47a₂.

The data transmission bit rate is determined by the temperature monitoring circuit 42 correspondingly to the temperature of the signal amplifier 6. If the temperature of the signal amplifier 6 is higher than a target temperature value, the transmission bit rate will be higher. When the temperature of the signal amplifier 6 is lower than the target temperature value, the transmission bit rate will be lower. That is, when the temperature of the signal amplifier 6 is lower than the target temperature value, the data transmitter 40 sends packetized data at a high density. When the temperature of the signal amplifier 6 is higher than the target temperature value, the data transmitter 40 sends the packetized data at a low density.

As in the foregoing, the data transmitter 40 supplies the PC 9 with a control signal for controlling the transmission bit rate for packetized data so that the detected temperature of the signal amplifier 6 will not exceed a preset target temperature value. Thus, the data transmitter 40 is controlled for the temperature of the signal amplifier 6 not to exceed the target temperature value. Therefore, the data transmitter 40 may not be designed to suppress the maximum heat dissipation and the heatsinking mechanism can thus be simplified. Also the data transmitter 40 can have the enclosure thereof designed more compact and lightweight and can be manufactured with less costs.

Next, the fifth embodiment of the data transmitter according to the present invention will be described with reference to FIG. 10. As shown in FIG. 10, the data transmitter according to the fifth embodiment is generally indicated with a reference 50. The data transmitter 50 is basically similar in construction to the data transmitter 40 according to the fourth embodiment of the present invention, having been described in the above with reference to FIG. 8, except that there is provided an ambient temperature detection circuit 51. Therefore, the same or similar elements included in the data transmitter 50 as or to those in the data transmitter 1 are indicated in FIG. 10 with the same or similar references as or to those in FIG. 8 , and will not be described in detail below. Note that the solid lines in FIG. 10 indicate the flow of data while the broken lines indicate the flow of control signal.

As shown in FIG. 10, the data transmitter 50 includes an input/output circuit 2, base-band signal processor 4, RF signal modulation circuit 5, signal amplifier 6, thermo-sensor 7, antenna 12, ambient temperature detection circuit 53, and a temperature monitoring circuit 54. The base-band signal processor 4 includes a base-band signal processing circuit 51 and output control circuit 11.

The ambient temperature detection circuit 53 detects the ambient temperature, converts the detected ambient temperature to an electric signal, and supplies the electric signal to the temperature monitoring circuit 54.

The temperature monitoring circuit 54 compares a difference between a detected temperature indicated by an electric signal supplied from the thermo-sensor 7 and the ambient temperature detected by the ambient temperature detection circuit 53 with a pre-stored target temperature difference to determine an upper limit of the data transmission bit rate. That is, if the difference between the detected temperature indicated by the electric signal supplied from the thermo-sensor 7 and the ambient temperature detected by the ambient temperature detection circuit 53 is smaller than the target temperature difference, the temperature monitoring circuit 54 raises the upper limit of the data transmission bit rate. On the contrary, if the temperature difference is larger than the target one, the temperature monitoring circuit 54 lowers the upper limit. Thus, the temperature monitoring circuit 54 determines an upper limit and supplies a control signal indicative of the determined upper limit to the data processing control circuit 52.

In the data transmitter 50 constructed as having been described in the foregoing, input data will be transmitted wirelessly through a series of steps as shown in the flow chart in FIG. 11.

First at step S58 in FIG. 11, the thermo-sensor 7 detects the temperature of the signal amplifier 6, converts the detected ambient temperature to an electric signal, and supplies the electric signal to the temperature monitoring circuit 54. The ambient temperature detection circuit 53 detects the ambient temp erature, converts the detected ambient temperature to an electric signal, and supplies the electric signal to the temperature monitoring circuit 54.

At step S59, the temperature monitoring circuit 54 detects a difference between a detected temperature indicated by the electric signal supplied from the thermo-sensor 7 and the ambient temperature indicated by an electric signal supplied from the ambient temperature detection circuit 53.

At step S60, the temperature monitoring circuit 54 judges whether the temperature difference is smaller than a pre-stored target temperature difference. If the temperature difference is smaller than the target one, the temperature monitoring circuit 54 goes to step S61 where it will raise the upper limit of the data transmission bit rate. On the contrary, if the temperature difference is larger than the target one, the temperature monitoring circuit 54 goes to step S62 where it will lower the upper limit of the data transmission bit rate.

At step S63, the data processing control circuit 52 requests, via the input/output circuit 2, the PC 9 for sending a new packetized data.

At step S64, the PC 9 provides packetized data to the data processing control circuit 52 via the input/output circuit 2.

At step S65, the data processing control circuit 52 determines a data transmission bit rate, informs the base-band signal processing circuit 51 of the determined transmitted bit rate, and provides packetized data to the base-band signal processing circuit 51.

Next at step S66, the output control circuit 11 is supplied with data on the data transmission bit rate supplied from the data processing control circuit 52.

The output control circuit 11 judges, at step S67, whether the transmission bit rate for the packetized data is higher or lower than a certain threshold. If the momentary transmission bit rate is judged as being higher than the threshold, the output control circuit 11 supplies, at step S68, the signal amplifier 6 with a signal for changing the output power correspondingly to the momentary transmission bit rate for the packetized data. On the contrary, if the packetized data transmission bit rate is reduced, the signal amplifier 6 is supplied with a signal for reducing the output power.

On the contrary, if the data transmission bit rate is lower than the threshold, the output control circuit 11 shifts, at step S69, the signal amplifier 6 to a standby status in which the signal amplifier 6 will be supplied with no power.

Next at step S70, the base-band signal processing circuit 51 encodes the packetized data supplied from the data processing control circuit 52 to a base-band signal within a range not exceeding the upper limit of the data transmission bit rate, and supplies it to the RF signal modulation circuit 5.

At step S71, the RF signal modulation circuit 5 modulates the base-band signal supplied from the base-band processing circuit 51 to produce an RF signal which will be transmitted on a carrier wave.

At step S72, the signal amplifier 6 amplifies the RF signal supplied from the RF signal modulation circuit 5, and wirelessly transmits the amplified RF signal via the antenna 12.

As in the foregoing, the data transmitter 50 controls the transmission bit rate for packetized data so that the difference between the temperature of the signal amplifier 6 and ambient temperature will not exceed a preset target temperature difference. Thus, the data transmitter 50 is controlled for the temperature difference between the ambient temperature and internal temperature not to exceed the target temperature difference. Therefore, the data transmitter 50 may not be designed to suppress the maximum heat dissipation and the heatsinking mechanism can thus be simplified, and the internal temperature can be kept at an appropriate level correspondingly to the ambient temperature. Also the data transmitter 50 can have the enclosure thereof designed more compact and lightweight and can be manufactured with less costs.

Next, the sixth embodiment of the data transmitter according to the present invention will be described with reference to FIG. 12. As shown in FIG. 12, the data transmitter according to the fifth embodiment is generally indicated with a reference 60. The data transmitter 60 is basically similar in construction to the data transmitter 40 according to the fourth embodiment of the present invention, having been described in the above with reference to FIG. 8, except that there is provided a calender storage circuit 61 to store a target temperature value corresponding to a date and hours. Therefore, the same or similar elements included in the data transmitter 60 as or to those in the data transmitter 40 are indicated in FIG. 12 with the same or similar references as or to those in FIG. 8 , and will not be described in detail below. Note that the solid lines in FIG. 12 indicate the flow of data while the broken lines indicate the flow of control signal.

As shown in FIG. 12, the data transmitter 60 includes an input/output circuit 2, base-band signal processor 4, RF signal modulation circuit 5, signal amplifier 6, thermo-sensor 7, antenna 12, calender storage circuit 61, data processing control circuit 62, and a temperature monitoring circuit 64. The base-band signal processor 4 includes a base-band signal processing circuit 63 and output control circuit 11.

The calender storage circuit 61 stores a target temperature value corresponding to a date and hours, and selects a current target temperature value correspondingly to a current date and hours, and supplies it to the temperature monitoring circuit 64.

The temperature monitoring circuit 64 compares a detected temperature value indicated by an electric signal supplied from the thermo-sensor 7 with a pre-stored target temperature value selected by the calender storage circuit 61 to determine an upper limit of the data transmission interval. That is, when the detected temperature value indicated by the electric signal supplied from the thermo-sensor 7 is lower than the target temperature value selected by the calender storage circuit 61, the temperature monitoring circuit 64 raises the upper limit of the data transmission bit rate. When the detected temperature value indicated by the electric signal supplied from the thermo-sensor 7 is higher than the target temperature value, the temperature monitoring circuit 64 lowers the upper limit of the data transmission bit rate. Thus, the temperature monitoring circuit 64 determines an upper limit of the data transmission bit rate, and supplies the data processing control circuit 63 with a control signal indicative of the determined upper limit.

In the data transmitter 60 constructed as having been described in the foregoing, input data will be transmitted wirelessly through a series of steps as shown in the flow chart in FIG. 13.

First at step S73 in FIG. 12, the thermo-sensor 7 detects the temperature of the signal amplifier 6, converts the detected ambient temperature to an electric signal, and supplies the electric signal to the temperature monitoring circuit 64. The calender storage circuit 61 supplies the temperature monitoring circuit 64 with a target temperature value corresponding to a date and hours.

At step S74, the temperature monitoring circuit 64 judges whether the temperature value indicated by the electric signal supplied from the thermo-sensor 7 is lower than the target one selected correspondingly to the date and hours stored in the calender storage circuit 61. If the temperature value indicated by the electric signal is lower than the target one, the temperature monitoring circuit 64 goes to step S75 where it will raise the upper limit of the data transmission bit rate. On the contrary, if the temperature value indicated by the electric signal is higher than the target one, the temperature monitoring circuit 64 goes to step S76 where it will lower the upper limit of the data transmission bit rate.

At step S77, the data processing control circuit 62 requests, via the input/output circuit 2, the PC 9 for sending a new packetized data. At step S78, the PC 9 provides packetized data to the data processing control circuit 62 via the input/output circuit 2.

At step S79, the data processing control circuit 62 determines a data transmission bit rate, informs the base-band signal processing circuit 63 of the determined transmitted bit rate, and provides packetized data to the base-band signal processing circuit 63.

Next at step S80, the output control circuit 11 is supplied with data on the data transmission bit rate supplied from the data processing control circuit 62.

The output control circuit 11 judges, at step S81, whether the transmission bit rate for the packetized data is higher or lower than a certain threshold. If the momentary transmission bit rate is judged as being higher than the threshold, the output control circuit 11 supplies, at step S82, the signal amplifier 6 with a signal for changing the output power correspondingly to the momentary transmission bit rate for the packetized data. On the contrary, if the packetized data transmission bit rate is reduced, the signal amplifier 6 is supplied with a signal for reducing the output power.

On the contrary, if the data transmission bit rate is lower than the threshold, the output control circuit 11 shifts, at step S83, the signal amplifier 6 to a standby status in which the signal amplifier 6 will be supplied with no power.

Next at step S84, the base-band signal processing circuit 63 encodes the packetized data supplied from the data processing control circuit 62 to a base-band signal within a range not exceeding the upper limit of the data transmission bit rate, and supplies it to the RF signal modulation circuit 5.

At step S85, the RF signal modulation circuit 5 modulates the base-band signal supplied from the base-band processing circuit 63 to produce an RF signal which will be transmitted on a carrier wave.

At step S86, the signal amplifier 6 amplifies the RF signal supplied from the RF signal modulation circuit 5, and wirelessly transmits the amplified RF signal via the antenna 12.

As in the foregoing, the data transmitter 60 controls the transmission bit rate for packetized data so that the temperature of the signal amplifier 6 will not exceed a preset target temperature selected according a date and hours selected. Thus, the data transmitter 60 is controlled for the internal temperature not to exceed the target temperature determined correspondingly to the date and hours. Therefore, the data transmitter 60 can have a heatsinking and temperature control mechanisms designed simple, and the internal temperature can be kept at an appropriate level according to data on a temperature corresponding to the date and hours. Also the data transmitter 60 can have the enclosure thereof designed more compact and lightweight and can be manufactured with less costs.

Next, the seventh embodiment of the data transmitter according to the present invention will be described with reference to FIG. 14. As shown in FIG. 14, the data transmitter according to the third embodiment is generally indicated with a reference 70. The data transmitter 70 is basically similar in construction to the data transmitter 1 according to the first embodiment of the present invention, having been described in the above with reference to FIG. 1, except that it includes a division circuit 71 to divide data, first to third base-band signal processing circuits 72 to 74 to convert the divided data from the division circuit 71 to base-band signals, and a synthesis circuit 75 to combine the base-band signals from the base-band signal processing circuits 72 to 74, respectively, to provide a single composite signal and that the data processing control circuit 76 controls the maximum amplitude of the composite signal. This embodiment is an example of the data transmitter adopting a so-called multi-code CDMA system in which a plurality (three in this embodiment) of code channels for a high speed data transmission. Note that the same or similar elements included in the data transmitter 70 as or to those in the data transmitter 1 are indicated in FIG. 14 with the same or similar references as or to those in FIG. 1, and will not be described in detail below. Note that the solid lines in FIG. 14 indicate the flow of data while the broken lines indicate the flow of control signal.

As shown in FIG. 14, the data transmitter 70 includes an input/output circuit 2, RF signal modulation circuit 5, signal amplifier 6, thermo-sensor 7, output control circuit 11, antenna 12, division circuit 71, first to third base-band signal processing circuits 72 to 74, synthesis circuit 75, amplitude control circuit 76, and a temperature monitoring 77.

The division circuit 71 divides packetized data supplied from the input/output circuit 2 for three channels for example, supplies them to the first to third base-band signal processing circuits 72 to 74, respectively, in which they will be subjected to diffusion modulation with, for example, codes 1 to 3, respectively, being diffusion codes different from each other. The three diffusion-modulated channel signals are supplied to the synthesis circuit 75 which will further be described later.

The synthesis circuit 75 combines the three signals from the base-band signal processing circuits 72 to 74 to produce a composite signal which will be supplied to the amplitude control circuit 76.

The amplitude control circuit 76 is supplied with a control signal from the temperature monitoring circuit 77 which will further be described later, and controls, based on the control signal, the maximum amplitude of the composite signal supplied from the synthesis circuit 75. Namely, it limits the amplitude.

The temperature monitoring circuit 77 compares a detected temperature indicated by an electric signal supplied from the thermo-sensor 7 with a pre-stored target temperature value to determine a maximum amplitude of the composite signal. That is, when the temperature supplied from the thermo-sensor 7 is lower than the target temperature value, the temperature monitoring circuit 77 raises the upper limit of the maximum amplitude of the composite signal. When the temperature supplied from the thermo-sensor 7 is higher than the target temperature value, the temperature monitoring circuit 77 lowers the upper limit of the maximum amplitude of the composite signal. Thus, the temperature monitoring circuit 77 supplies the amplitude control circuit 76 with a control signal indicative of the determined upper limit value.

In the data transmitter 70 constructed as having been described in the foregoing, input data will be transmitted wirelessly through a series of steps as shown in the flow chart in FIG. 15.

Fist at step S87 in FIG. 15, the input/output circuit 2 is supplied with packetized data from the PC 9, and supplies it to the division circuit 71.

At step S88, the division circuit 71 divides the packetized data supplied from the input/output circuit 2 for three channels, supplies them to the first to third base-band signal processing circuits 72 to 74, respectively.

At step S89, the base-band signal processing units 72 to 74 make diffusion modulation of the input data with diffusion codes 1 to 3 different from each other, and supply the diffusion-modulated channel signals to the synthesis circuit 75.

At step S90, the synthesis circuit 75 combines the signals from the base-band signal processing circuits 72 to 74 to produce a composite signal, and supplies it to the amplitude control, circuit 76.

First at step S91, the thermo-sensor 7 detects the temperature of the signal amplifier 6, converts it to an electric signal, and supplies it to the temperature monitoring circuit 77.

At step S92, the temperature monitoring circuit 77 judges whether a detected temperature indicated by the electric signal supplied from the thermo-sensor 7 is lower than the pre-stored target temperature value. If the detected temperature indicated by the electric signal is judged as being lower than the target temperature value, the temperature monitoring circuit 77 goes to step S93 where it will raise the upper limit of the maximum amplitude of the composite signal and the source voltage of the signal amplifier 6. On the contrary, if the detected temperature is judged to be higher than the target temperature value, the temperature monitoring circuit 77 goes to step S94 where it will lower the upper limit of the maximum amplitude of the composite signal and source voltage of the signal amplifier 6. Thus, the temperature monitoring circuit 77 determines an upper limit, and supplies a control signal indicative of the determined upper limit to the amplitude control circuit 76.

At step S95, the amplitude control circuit 76 is supplied with a control signal indicative of the upper limit of the maximum amplitude of the composite signal, having been determined by the temperature monitoring circuit 77. The amplitude control circuit 76 limits the amplitude of the composite signal on the basis of the control signal, and supplies the composite signal to the RF signal modulation circuit 5.

At step S96, the RF signal modulation circuit 5 modulates the composite signal supplied from the. amplitude control circuit 76 to an RF signal which will be transmitted on a carrier wave, and supplies it to the signal amplifier 6.

At step S97, the signal amplifier 6 amplifies the RF signal supplied from the RF signal modulation circuit 5, and wirelessly transmits the amplified RF signal via the antenna 12.

As in the foregoing, in the data transmitter 70, the upper limit of the maximum amplitude of the composite signal is controlled so that the detected temperature of the signal amplifier 6 will not exceed the preset target temperature. value. Thus, in the data transmitter 70, the temperature of the signal amplifier 6 is controlled not to exceed the target temperature value. Therefore, the data transmitter 70 may not be designed to suppress the maximum heat dissipation and the heatsinking mechanism can thus be simplified. Thus the data transmitter 70 can have the enclosure thereof designed more compact and lightweight and can be manufactured with less costs.

Next, the eighth embodiment of the data transmitter according to the present invention will be described with reference to FIG. 16. As shown, the eighth embodiment of the data transmitter is generally indicated with a reference 80. The data transmitter 80 is basically similar in construction to the data transmitter 70 according to the first embodiment of the present invention, having been described in the above with reference to FIG. 14 , except that there is provided an ambient temperature detection circuit 81 to detect the ambient temperature of the data transmitter 80. Therefore, the same or similar elements included in the data transmitter 80 as or to those in the data transmitter 70 are indicated in FIG. 16 with the same or similar references as or to those in FIG. 14, and will not be described in detail below. Note that the solid lines in FIG. 16 indicate the flow of data while the broken lines indicate the flow of control signal.

As shown in FIG. 16, the data transmitter 80 includes an input/output circuit 2, RF signal modulation circuit 5, signal amplifier 6, therrno-sensor 7, output control circuit 11, antenna 12, division circuit 71, first to third base-band signal processing circuits 72 to 74, synthesis circuit 75, amplitude control circuit 76, ambient temperature detection circuit 81, and a temperature monitoring circuit 82.

The ambient temperature detection circuit 81 is provided to detect the ambient temperature of the data transmitter 80, converts the detected ambient temperature to an electric signal and supplies the electric signal to the temperature monitoring circuit 82.

The temperature monitoring circuit 82 compares a difference between a detected temperature indicated by an electric signal supplied from the thermo-sensor 7 and the ambient temperature indicated by an electric signal supplied from the ambient temperature detection circuit 81 with a pre-stored target temperature difference to determine a maximum amplitude of the composite signal. That is, when a temperature difference between a detected temperature indicated by an electric signal supplied from the thermo-sensor 7 and ambient temperature indicated by an electric signal supplied from the ambient temperature detection circuit 81 is smaller than the target temperature difference, the temperature monitoring circuit 82 raises the upper limit of the maximum amplitude ofthe composite signal. When the temperature difference between a detected temperature indicated by the electric signal supplied from the thermo-sensor 7 and ambient temperature indicated by the electric signal supplied from the ambient temperature detection circuit 81 is larger than the target temperature difference, the temperature monitoring circuit 82 lowers the upper limit of the maximum amplitude of the composite signal. Thus, the temperature monitoring circuit 82 supplies the amplitude control circuit 76 with a control signal indicative of the determined upper limit value.

In the data transmitter 80 constructed as having been described in the foregoing, input data will be transmitted wirelessly through a series of steps as shown in the flow chart in FIG. 17.

Fist at step S98 in FIG. 17, the input/output circuit 2 is supplied with packetized data from the PC 9, and supplies it to the division circuit 71.

At step S99, the division circuit 71 divides the packetized data supplied from the input/output circuit 2 for three channels, supplies them to the first to third base-band signal processing circuits 72 to 74, respectively.

At step S100, the base-band signal processing units 72 to 74 make diffusion modulation of the input data with diffusion codes 1 to 3 different from each other, and supply the diffusion-modulated channel signals to the synthesis circuit 75.

At step S101, the synthesis circuit 75 combines the signals from the base-band signal processing circuits 72 to 74 to produce a composite signal, and supplies it to the amplitude control circuit 76.

First at step S102, the thermo-sensor 7 detects the temperature of the signal amplifier 6, converts it to an electric signal, and supplies it to the temperature monitoring circuit 77. The ambient temperature detection circuit 81 detects the ambient temperature of the data transmitter 80, converts the detected ambient temperature to an electric signal, and supplies the electric signal to the temperature monitoring circuit 82.

At step S103, the temperature monitoring circuit 82 detects a difference between a detected temperature indicated by the electric signal supplied from the thermo-sensor 7 and ambient temperature indicated by the electric signal supplied from the ambient temperature detection circuit 81.

At step S104, the temperature monitoring circuit 82 judges whether the temperature difference is smaller than the pre-stored target temperature difference. If the temperature difference is smaller than the target one, the temperature monitoring circuit 82 goes to step S105 where it will raise the upper limit of the maximum amplitude of the composite signal and the source voltage of the signal amplifier 6. On the contrary, if the temperature difference is judged to be larger than the target one, the temperature monitoring circuit 82 goes to step S106 where it will lower the upper limit of the maximum amplitude of the composite signal and source voltage of the signal amplifier 6.

At step S107, the amplitude control circuit 76 is supplied with a control signal indicative of the upper limit of the maximum amplitude of the composite signal, having been determined by the temperature monitoring circuit 82. The amplitude control circuit 76 limits the amplitude of the composite signal on the basis of the control signal, and supplies the composite signal to the RF signal modulation circuit 5.

At step S108, the RF signal modulation circuit 5 modulates the composite signal supplied from the amplitude control circuit 76 to an RF signal which will be transmitted on a carrier wave, and supplies it to the signal amplifier 6.

At step S109, the signal amplifier 6 amplifies the RF signal supplied from the RF signal modulation circuit 5, and wirelessly transmits the amplified RF signal via the antenna 12.

As in the foregoing, in the data transmitter 80, the upper limit of the maximum amplitude of the composite signal is controlled so that the difference between the temperature of the signal amplifier 6 and ambient temperature will not exceed a preset target temperature difference. Thus, in the data transmitter 80, the difference between the ambient and internal temperatures is controlled not to exceed the target temperature difference. Therefore, in the data transmitter 80, the heatsinking mechanism and thermo-controlling mechanism can be designed simple and the internal temperature can be kept at an appropriate level correspondingly to the ambient temperature. Also, the enclosure of the data transmitter 80 can be designed compact and lightweight and the data transmitter 80 can be manufactured with less costs.

Next, the ninth embodiment of the data transmitter according to the present invention will be described with reference to FIG. 18. As shown in FIG. 18, the data transmitter according to the ninth embodiment is generally indicated with a reference 90. The data transmitter 90 is basically similar in construction to the data transmitter 70 according to the fourth embodiment of the present invention, having been described in the above with reference to FIG. 13, except that there is provided a calender storage circuit 91 to store a target temperature value corresponding to a date and hours. Therefore, the same or similar elements included in the data transmitter 90 as or to those in the data transmitter 70 are indicated in FIG. 18 with the same or similar references as or to those in FIG. 13, and will not be described in detail below. Note that the solid lines in FIG. 18 indicate the flow of data while the broken lines indicate the flow of control signal.

As shown in FIG. 18, the data transmitter 90 includes an input/output circuit 2, RF signal modulation circuit 5, signal amplifier 6, thermo-sensor 7, output control circuit 11, antenna 12, division circuit 71, first to third base-band signal processing circuits 72 to 74, synthesis circuit 75, amplitude control circuit 76, calender storage circuit 91, and a temperature monitoring circuit 92.

The calender storage circuit 91 stores a target temperature value corresponding to a date and hours, and selects a current target temperature value correspondingly to a current date and hours, and supplies it to the temperature monitoring circuit 92.

The temperature monitoring circuit 92 compares a detected temperature value indicated by an electric signal supplied from the thermo-sensor 7 with a pre-stored target temperature value selected by the calender storage circuit 91 to determine an upper limit of the maximum amplitude of the composite signal. That is, when the detected temperature value indicated by the electric signal supplied from the thermo-sensor 7 is lower than the target temperature value selected by the calender storage circuit 91, the temperature monitoring circuit 92 raises the upper limit of the maximum amplitude of the composite signal. When the detected temperature value indicated by the electric signal supplied from the thermo-sensor 7 is higher than the target temperature value, the temperature monitoring circuit 92 lowers the upper limit ofthe maximum amplitude of the composite signal. Thus, the temperature monitoring circuit 92 determines an upper limit of the maximum amplitude of the composite signal, and supplies the amplitude control circuit 76 with a control signal indicative of the determined upper limit.

In the data transmitter 90 constructed as having been described in the foregoing, input data will be transmitted wirelessly through a series of steps as shown in the flow chart in FIG. 19.

Fist at step S110 in FIG. 19, the input/output circuit 2 is supplied with packetized data from the PC 9, and supplies it to the division circuit 71.

At step S111, the division circuit 71 divides the packetized data supplied from the input/output circuit 2 for three channels, supplies them to the first to third base-band signal processing circuits 72 to 74, respectively.

At step S112, the base-band signal processing units 72 to 74 make diffusion modulation ofthe input data with diffusion codes 1 to 3 different from each other, and supply the diffusion-modulated channel signals to the synthesis circuit 75.

At step S113, the synthesis circuit 75 combines the signals from the base-band signal processing circuits 72 to 74 to produce a composite signal, and supplies it to the amplitude control circuit 76.

First at step S114, the thermo-sensor 7 detects the temperature of the signal amplifier 6, converts it to an electric signal, and supplies it to the temperature monitoring circuit 77. The calender storage circuit 91 supplies the temperature monitoring circuit 99 with a target temperature value stored correspondingly to a date and hours.

At step S115, the temperature monitoring circuit 92 judges whether a detected temperature indicated by the electric is lower than a target temperature value selected correspondingly to a date and hours. If the detected temperature indicated by the electric signal is judged as being lower than the target temperature value, the temperature monitoring circuit 92 goes to step S116 where it will raise the upper limit of the maximum amplitude of the composite signal and the source voltage of the signal amplifier 6. On the contrary, if the detected temperature indicated by the electric signal is judged to be higher than the target temperature value, the temperature monitoring circuit 92 goes to step S117 where it will lower the upper limit of the maximum amplitude ofthe composite signal and source voltage ofthe signal amplifier 6.

At step S118, the amplitude control circuit 76 is supplied with a control signal indicative of the upper limit of the maximum amplitude of the composite signal, having been determined by the temperature monitoring circuit 92. The amplitude control circuit 76 limits the amplitude of the composite signal on the basis of the control signal, and supplies the composite signal to the RF signal modulation circuit 5.

At step S119, the RF signal modulation circuit 5 modulates the composite signal supplied from the amplitude control circuit 76 to an RF signal which will be transmitted on a carrier wave, and supplies it to the signal amplifier 6.

At step S120, the signal amplifier 6 amplifies the RF signal supplied from the RF signal modulation circuit 5, and wirelessly transmits the amplified RF signal via the antenna 12.

As in the foregoing, in the data transmitter 90, the upper limit of the maximum amplitude of the composite signal is controlled so that the temperature of the signal amplifier 6 will not exceed a target temperature value selected correspondingly to a date and hours. Thus, in the data transmitter 90, the internal temperatures is controlled not to exceed the target temperature value determined correspondingly to a date and hours. Therefore, in the data transmitter 90, the heatsinking mechanism and thermo-controlling mechanism can be designed simple and the internal temperature can be kept at an appropriate level correspondingly to data on a date and hours. Also, the enclosure of the data transmitter 90 can be designed compact and lightweight and the data transmitter 90 can be manufactured with less costs.

Next, the tenth embodiment of the data transmitter according to the present invention will be described with reference to FIG. 20. As shown in FIG. 20, the data transmitter according to the tenth embodiment is generally indicated with a reference 100. The data transmitter 100 is basically similar in construction to the data transmitter 1 according to the first embodiment of the present invention, having been described in the above with reference to FIG. 1, except that there are provided a speech signal input/output circuit 101 and speech codec (coder/decoder) circuit 102. Therefore, the same or similar elements included in the data transmitter 100 as or to those in the data transmitter 1 are indicated in FIG. 20 with the same or similar references as or to those in FIG. 1, and will not be described in detail below. Note that the solid lines in FIG. 20 indicate the flow of data while the broken lines indicate the flow of control signal.

As shown in FIG. 20, the data transmitter 100 includes a base-band signal processor 4, RF signal modulation circuit 5, signal amplifier 6, thermo-sensor 7, antenna 12, speech signal input/output circuit 101, speech codec circuit 102 and a temperature monitoring unit 103. The base-band signal processor 4 includes a base-band signal processing circuit 10 and output control circuit 11.

The speech signal input/output circuit 101 is supplied with a speech signal from outside, and supplies it to the speech codec circuit 102 which will further be described later.

The speech codec circuit 102 encodes the speech signal supplied from the speech signal input/output circuit 101, and supplies the encoded speech data to the base-band signal processing circuit 10.

The temperature monitoring circuit 103 compares a detected temperature indicated by an electric signal supplied from the thermo-sensor 7 with a pre-stored target temperature value to determine an upper limit of an encoding bit rate in the speech codec circuit 102. That is, if the detected temperature indicated by the electric signal supplied from the thermo-sensor 7 is lower than the pre-stored target temperature value, the temperature monitoring circuit 103 raises the upper limit of the encoding bit rate. On the contrary, if the detected temperature is higher than the target temperature value, the temperature monitoring circuit 103 lowers the upper limit. Thus, the temperature monitoring circuit 103 determines an upper limit and supplies a control signal indicative of the determined upper limit to the speech codec circuit 102.

In the data transmitter 100 constructed as having been described in the foregoing, input speech signal will be transmitted wirelessly through a series of steps as shown in the flow chart in FIG. 21.

First at step S121 in FIG. 21, the thermo-sensor 7 detects the temperature of the signal amplifier 6, converts it to an electric signal, and supplies the electric signal to the temperature monitoring circuit 112.

At step S122, the temperature monitoring circuit 112 judges whether the temperature value indicated by the electric signal supplied from the thermo-sensor 7 is lower than the pre-stored target temperature value . When the temperature value indicated by the electric signal is lower than the target one, the temperature monitoring circuit 112 goes to step S123 where it will lower the upper limit of the data encoding bit rate and the encoding bit rate in the base-band signal processing circuit 10. On the contrary, if the temperature value indicated by the electric signal is higher than the target one, the temperature monitoring circuit 112 goes to step S124 where it will raise the upper limit of the data encoding bit rate and the encoding bit rate in the base-band signal processing circuit 10.

At step S125, the speech codec circuit 102 determines, based on the status of a speech signal including a silent state, an encoding bit rate for each frame being an encoding unit within a range in which the upper limit of the data encoding bit rate determined by the temperature monitoring circuit 112, informs the base-band signal processing circuit 10 of the transmission bit rate corresponding to the encoding bit rate for each frame, encodes the speech data at the encoding bit rate for each frame, and provides the encoded speech data to the base-band signal processing circuit 10.

At step S126, the output control circuit 11 detects wether or not a speech data exists in the speech codec circuit 102.

At step S127, the output control circuit 11 judges whether speech data is transmitted at a predetermined interval. If speech data is transmitted at the predetermined interval, the operation goes to step S128 where the base-band signal processing circuit 10 will produce a base-band signal from the encoded speech data on the basis of the encoding bit rate determined at the step S125 and supply a transmission data to the RF signal modulation circuit 5.

On the contrary, when no speech data is supplied for more than a predetermined length of time, the output control circuit 11 will shift, at step S129, the RF signal modulation circuit 5 and signal amplifier 6 to a standby status in which the RF signal modulation circuit 5 and signal amplifier 6 will be supplied with no power.

At step S130, the RF signal modulation circuit 5 modulates the base-band signal supplied from the base-band signal processing circuit 10 to produce an RF signal which will be transmitted on a carrier wave.

At step S131, the signal amplifier 6 amplifies the RF signal supplied from the RF signal modulation circuit 5, and transmits the amplified RF signal via the antenna 12.

As in the foregoing, in the data transmitter 100, the upper limit of the speech data encoding bit rate is controlled such that the detected temperature of the signal amplifier 6 will not exceed the preset target temperature value. Thus, the data transmitter 100 is controlled for the temperature of the signal amplifier 6 not to be higher than the target temperature value. Therefore, the data transmitter 100 may not be designed to suppress the maximum heat dissipation and the heatsinking mechanism can thus be simplified. Thus the data transmitter 100 can have the enclosure thereof designed more compact and lightweight and can be manufactured with less costs.

Next, the eleventh embodiment of the data transmitter according to the present invention will be described with reference to FIG. 22. As shown, the eleventh embodiment of the data transmitter is generally indicated with a reference 110. The data transmitter 110 is basically similar in construction to the data transmitter 1 according to the tenth embodiment of the present invention, having been described in the above with reference to FIG. 1, except that there is provided an ambient temperature detection circuit 111 to detect the ambient temperature of the data transmitter 110. Therefore, the same or similar elements included in the data transmitter 110 as or to those in the data transmitter 1 are indicated in FIG. 22 with the same or similar references as or to those in FIG. 1, and will not be described in detail below. Note that the solid lines in FIG. 22 indicate the flow of data while the broken lines indicate the flow of control signal.

As shown in FIG. 22, the data transmitter 110 includes a base-band signal processor 4, RF signal modulation circuit 5, signal amplifier 6, thermo-sensor 7, antenna 12, speech signal input/output circuit 101, speech codec circuit 102, ambient temperature detection circuit 111, and a temperature monitoring circuit 112. The base-band signal processor 4 includes a base-band signal processing circuit 10 and output control circuit 11.

The ambient temperature detection circuit 111 detects the ambient temperature, converts the detected ambient temperature to an electric signal, and supplies the electric signal to the temperature monitoring circuit 112.

The temperature monitoring circuit 112 compares the detected temperature indicated by the electric signal supplied from the thermo-sensor 7 with a pre-stored target temperature to determine a speech data encoding bit rate. That is, if the a difference between the detected temperature indicated by the electric signal supplied from the thermo-sensor 7 and the ambient temperature detected by the ambient temperature detection circuit 111 is smaller than a target temperature difference, the temperature monitoring circuit 112 raises the upper limit of the speech data encoding bit rate. On the contrary, if the difference between the detected temperature is higher than the target temperature difference, the temperature monitoring circuit 112 lowers the upper limit. Thus, the temperature monitoring circuit 112 determines an upper limit and supplies a control signal indicative of the determined upper limit to the speech codec circuit 102.

In the data transmitter 110 constructed as having been described in the foregoing, input data will be transmitted wirelessly through a series of steps as shown in the flow chart in FIG. 23.

First at step S132 in FIG. 23, the thermo-sensor 7 detects the temperature of the signal amplifier 6, converts it to an electric signal, and supplies the electric signal to the temperature monitoring circuit 112. Also, the ambient temperature detection circuit 111 detects the ambient temperature, and supplies the detected ambient temperature to the temperature monitoring circuit 112.

At step S133, the temperature monitoring circuit 112 detects a difference between the detected temperature indicated by the electric signal supplied from the thermo-sensor 7 and the ambient temperature indicated by the electric signal supplied from the ambient temperature detection circuit 111.

At step S134, the temperature monitoring circuit 112 judges whether the temperature difference is smaller than a pre-stored pre-stored target temperature difference . When the temperature difference is smaller than the target one, the temperature monitoring circuit 112 goes to step S135 where it will the upper limit of the speech data encoding bit rate and the transmission bit rate in the base-band signal processing circuit 10. On the contrary, if the temperature difference is larger than the target one, the temperature monitoring circuit 112 goes to step S136 where it will lower the upper limit of the speech data encoding bit rate and the transmission bit rate in the base-band signal encoding circuit 10.

At step S137, the speech codec circuit 102 determines, based on the status of a speech signal including a silent state, an encoding bit rate for each frame being an encoding unit within a range in which the upper limit of the data encoding bit rate determined by the temperature monitoring circuit 112, informs the base-band signal processing circuit 10 of the transmission bit rate corresponding to the encoding bit rate for each frame, encodes the speech data at the encoding bit rate for each frame, and provides the encoded speech data to the base-band signal processing circuit 10.

At step S138, the output control circuit 11 detects wether or not a speech data exists in the speech codec circuit 102.

At step S139, the output control circuit 11 judges whether speech data is transmitted at a predetermined interval. If speech data is transmitted at the predetermined interval, the operation goes to step S140 where the base-band signal processing circuit 10 will produce a base-band signal from the encoded speech data on the basis of the encoding bit rate determined at the step S137 and supply a transmission data to the RF signal modulation circuit 5. On the contrary, when no speech data is supplied for more than a predetermined length of time, the output control circuit 11 will shift, at step S141, the RF signal modulation circuit 5 and signal amplifier 6 to a standby status in which the RF signal modulation circuit 5 and signal amplifier 6 will be supplied with no power.

At step S142, the RF signal modulation circuit 5 modulates the base-band signal supplied from the base-band signal processing circuit 10 to produce an RF signal which will be transmitted on a carrier wave.

At step S143, the signal amplifier 6 amplifies the RF signal supplied from the RF signal modulation circuit 5, and transmits the amplified RF signal via the antenna 12.

As in the foregoing, in the data transmitter 110, the upper limit of the speech data encoding bit rate is controlled so that the difference between the temperature of the signal amplifier 6 and ambient temperature will not exceed a preset target temperature difference. Thus, in the data transmitter 110, the difference between the ambient and internal temperatures is controlled not to exceed the target temperature difference. Therefore, in the data transmitter 110, the heatsinking mechanism and thermo-controlling mechanism can be designed simple and the internal temperature can be kept at an appropriate level correspondingly to the ambient temperature. Also, the enclosure of the data transmitter 110 can be designed compact and lightweight and the data transmitter 110 can be manufactured with less costs.

Next, the twelfth embodiment of the data transmitter according to the present invention will be described with reference to FIG. 24. As shown in FIG. 24, the data transmitter according to the ninth embodiment is generally indicated with a reference 120. The data transmitter 120 is basically similar in construction to the data transmitter 100 according to the tenth embodiment of the present invention, having been described in the above with reference to FIG. 20, except that there is provided a calender storage circuit 121 to store a target temperature value corresponding to a date and hours. Therefore, the same or similar elements included in the data transmitter 120 as or to those in the data transmitter 100 are indicated in FIG. 24 with the same or similar references as or to those in FIG. 20 , and will not be described in detail below. Note that the solid lines in FIG. 24 indicate the flow of data while the broken lines indicate the flow of control signal.

As shown in FIG. 24, the data transmitter 120 includes a base-band signal processor 4, RF signal modulation circuit 5, signal amplifier 6, thermo-sensor 7, antenna 12, speech signal input/output circuit 101, speech codec circuit 102, calender storage circuit 121, and a temperature monitoring circuit 122. The base-band signal processor 4 includes a base-band signal processing circuit 10 and output control circuit 11.

The calender storage circuit 121 stores a target temperature value corresponding to a date and hours, and selects a current target temperature value correspondingly to a current date and hours, and supplies it to the temperature monitoring circuit 122.

The temperature monitoring circuit 122 compares a detected temperature value indicated by an electric signal supplied from the thermo-sensor 7 with a pre-stored target temperature value selected by the calender storage circuit 121 to determine an upper limit of the maximum amplitude of a composite signal. That is, when the detected temperature value indicated by the electric signal supplied from the thermo-sensor 7 is lower than the target temperature value selected by the calender storage circuit 121, the temperature monitoring circuit 122 raises the upper limit of the maximum amplitude of the composite signal. When the detected temperature value indicated by the electric signal supplied from the thermo-sensor 7 is higher than the target temperature value, the temperature monitoring circuit 122 lowers the upper limit of the maximum amplitude of the composite signal. Thus, the temperature monitoring circuit 122 determines an upper limit of the maximum amplitude of the composite signal, and supplies the speech codec circuit 102 with a control signal indicative of the determined upper limit.

In the data transmitter 120 constructed as having been described in the foregoing, input data will be transmitted wirelessly through a series of steps as shown in the flow chart in FIG. 25.

Fist at step S144 in FIG. 25, the thermo-sensor 7 detects the temperature of the signal amplifier 6, converts the detected temperature to an electric signal, and supplies the electric signal to the temperature monitoring circuit 122. The calender storage circuit 121 supplies the temperature monitoring circuit 122 with a target temperature value corresponding to a date and hours.

At step S145, the temperature monitoring circuit 122 judges whether the temperature value indicated by the electric signal supplied from the thermo-sensor 7 is lower than the target one selected correspondingly to the date and hours stored in the calender storage circuit 121. If the temperature value indicated by the electric signal is lower than the target one, the temperature monitoring circuit 122 goes to step S146 where it will raise the upper limit of the speech data encoding bit rate and the data transmission bit rate in the base-band signal processing circuit 10. On the contrary, if the temperature value indicated by the electric signal is higher than the target one, the temperature monitoring circuit 122 goes to step S147 where it will lower the upper limit of the speech data encoding bit rate and the data transmission bit rate in the base-band signal processing circuit 10.

At step S148, the speech codec circuit 102 determines, based on the status of a speech signal including a silent state, an encoding bit rate for each frame being an encoding unit within a range in which the upper limit of the data encoding bit rate determined by the temperature monitoring circuit 122, informs the base-band signal processing circuit 10 of the transmission bit rate corresponding to the encoding bit rate for each frame, encodes the speech data at the encoding bit rate for each frame, and provides the encoded speech data to the base-band signal processing circuit 10.

At step S149, the output control circuit 11 detects wether or not a speech data exists in the speech codec circuit 102.

At step S150, the output control circuit 11 judges whether speech data is transmitted at a predetermined interval. If speech data is transmitted at the predetermined interval, the operation goes to step S151 where the base-band signal processing circuit 10 will produce a base-band signal from the encoded speech data on the basis of the encoding bit rate determined at the step S148 and supply a transmission data to the RF signal modulation circuit 5. On the contrary, when no speech data is supplied for more than a predetermined length of time, the output control circuit 11 will shift, at step S152, the RF signal modulation circuit 5 and signal amplifier 6 to a standby status in which the RF signal modulation circuit 5 and signal amplifier 6 will be supplied with no power.

At step S153, the RF signal modulation circuit 5 modulates the base-band signal supplied from the base-band signal processing circuit 10 to produce an RF signal which will be transmitted on a carrier wave.

At step S154, the signal amplifier 6 amplifies the RF signal supplied from the RF signal modulation circuit 5, and transmits the amplified RF signal via the antenna 12.

As in the foregoing, in the data transmitter 120, the upper limit of the speech data encoding bit rate is controlled so that the temperature of the signal amplifier 6 will not exceed a preset target temperature value selected correspondingly to a date and hours. Thus, in the data transmitter 120 , the internal temperatures is controlled not to exceed the target temperature value determined correspondingly to the date and hours. Therefore, in the data transmitter 120, the heatsinking mechanism and thermo-controlling mechanism can be designed simple and the internal temperature can be kept at an appropriate level correspondingly to the data on the date and hours. Also, the enclosure of the data transmitter 120 can be designed compact and lightweight and the data transmitter 120 can be manufactured with less costs.

As having been described in the foregoing, the portable wireless data transmitter according to the present invention includes a data transmission processing controlling means for controlling the transmission rate for data going to be transmitted, internal temperature detecting means, and a temperature monitoring means for controlling the data transmission processing controlling means correspondingly to a detected temperature indicated by an electric signal supplied from the internal temperature detecting means.

Therefore, in the above data transmitter according to the present invention, the data transmission rate is controlled correspondingly to a detected internal temperature to permit to suppress heat dissipation inside the data transmitter. Thus, for the data transmitter according to the present invention, the heatsinking mechanism can be designed simple and the enclosure be designed compact. Hence, the data transmitter itself be manufactured with a reduced cost.

The portable wireless data transmitter according to the present invention includes a data encoding means, internal temperature detecting means, and a temperature monitoring means for controlling the data encoding means correspondingly to a detected temperature indicated by an electric signal supplied from the internal temperature detecting means.

Therefore, in the above data transmitter, the data encoding is controlled correspondingly to a detected internal temperature to permit to suppress heat dissipation inside the data transmitter. Thus, for the data transmitter according to the present invention, the heatsinking mechanism can be designed simple and the enclosure be designed compact. Hence, the data transmitter itself be manufactured with a reduced cost.

The method for wireless data transmission according to the present invention includes steps of detecting an internal temperature, and controlling data for transmission correspondingly to the detected internal temperature.

Therefore, in the above data transmitting method according to the present invention, the data transmission is controlled correspondingly to a detected internal temperature to permit to suppress heat dissipation during data transmission. Hence, for the data transmitting method according to the present invention, the heatsinking process can be simplified.

Also for the data transmitter adopting the above data transmitting method according to the present invention, the enclosure can be designed compact. Hence, the data transmitter can be designed with a reduced cost.

Also the method for wireless data transmission according to the present invention includes steps of encoding data going to be transmitted, detecting an internal temperature, and controlling the data encoding correspondingly to the detected internal temperature.

In the above data transmitting method, the data encoding is controlled correspondingly to the detected internal temperature to permit to suppress heat dissipation during data transmission. Hence, for the data transmitting method according to the present invention, the heatsinking process can be simplified.

Also, for the data transmitter adopting the above data transmitting method according to the present invention, the enclosure can be designed compact. Further, the data transmitter can be manufactured with a reduced cost.

Note that the present invention is not limited to the embodiments having been described in the foregoing. For example, each of the data transmitters according to the aforementioned second, fifth, eighth and eleventh embodiments of the present invention includes an ambient temperature detection circuit which detects the ambient temperature at which the data transmitter is operated. However, the ambient temperature detection circuit may be a one provided in a position where it will not be adversely affected bu a heat dissipated from other circuits such as the signal amplifier, etc.

Each of the second, fifth, eighth and eleventh embodiments of the data transmitter provided with the ambient temperature detection circuit according to the present invention is controlled so that the difference between the ambient and internal temperatures is as small as possible within a temperature range at which the signal amplifier can operate normally.

Thus, it is possible to reduce the incongruity the user of the data transmitter will feel when there is a difference between the ambient and internal temperatures. The "incongruity" is such that when the ambient temperature is low, the user of a portable telephone will possibly feel a normal temperature of the telephone body derived from the normal operation as an extremely high one.

Also, each of the aforementioned third, sixth, ninth and twelfth embodiments of the data transmitter according to the present invention includes a calender storage circuit which stores target temperature values corresponding to dates and hours and selects an appropriate one of the target temperature values. However, the calender storage circuit may be a means for selecting a target temperature value corresponding to a district where the data transmitter is used.

In case the above means for selecting a target temperature corresponding to a district where the data transmitter is used instead of the calender storage circuit, the data transmitter is designed to receive position information from a nearest base station or it is provided with a GPS (global positioning system) to recognize the position of the data transmitter itself.

In case the data transmitter is a PDA used in a portable telephone system, it always communicates with a nearest base station and receives information on the base station. At this time, the data transmitter receives information on the position of the base station along with the base station information to determine a target temperature value based on the position information. Thus the data transmitter can determine a target temperature value corresponding to a district where it is used.

Also, in case the data transmitter is internally provided with a GPS, it is always supplied with information on the position of itself from the internal GPS, and determines a target temperature value based on the position information. Such a data transmitter can determined a target temperature value more precisely since its own position is identified more accurately.

Further, in the aforementioned embodiment, the PC 9 is provided outside the data transmitter such as a portable telephone or the like. However, it may of course be provided as a data processing circuit such as a CPU inside the data transmitter.

## Claims

1. A portable wireless data transmitter comprising:
a data transmission processing controlling means for controlling the transmission rate for data going to be transmitted;
an internal temperature detecting means; and
a temperature monitoring means for controlling the data transmission processing controlling means correspondingly to a detected temperature supplied from the internal temperature detecting means.

2. The apparatus as set forth in claim 1, wherein:
the data transmission processing controlling means controls input of the data;
the temperature monitoring means compares the detected temperature supplied from the internal temperature detecting means with a pre-stored target temperature value; and
the data transmission processing controlling means controls the transmission interval for packetized data on the basis of the result of the comparison.

3. The apparatus as set forth in claim 2, wherein the temperature monitoring means produces a signal for raising the upper limit of the packetized data transmission interval when the detected temperature is lower than the target temperature value or a signal lowering the upper limit of the packetized data transmission interval when the detected temperature is higher than the target temperature value.

4. The apparatus as set forth in claim 1, wherein:
the data transmission processing controlling means controls input of the data;
there is provided an ambient temperature detecting means;
the temperature monitoring means compares the detected temperature supplied from the internal temperature detecting means with the ambient temperature supplied from the ambient temperature detecting means; and
the data transmission processing controlling means controls the packetized data transmission interval based on the result of the comparison.

5. The apparatus as set forth in claim 1, wherein:
the data transmission processing controlling means controls input of the data;
there is provided a calender storage means having stored therein a target temperature value corresponding to each date and hours;
the temperature monitoring means compares the detected temperature supplied from the internal temperature detecting means with a target temperature corresponding to a date and hours, supplied from the calender storage means; and
the data transmission processing controlling means controls the packetized data transmission interval based on the result of the comparison.

6. The apparatus as set forth in claim 1, wherein:
the data transmission processing controlling means controls input of the data;
the temperature monitoring means compares the detected temperature supplied from the internal temperature detecting means with a pre-stored target temperature value; and
the data transmission processing controlling means controls the packetized data transmission bit rate based on the result of the comparison.

7. The apparatus as set forth in claim 6, wherein the temperature monitoring means produces a signal for raising the upper limit of the packetized data transmission bit rate when the detected temperature is lower than the target temperature value or a signal for lowering the upper limit of the packetized data transmission bit rate when the detected temperature is higher than the target temperature value.

8. The apparatus as set forth in claim 1, wherein:
the data transmission processing controlling means controls input of the data;
there is provided an ambient temperature detecting means;
the temperature monitoring means compares the detected temperature supplied from the internal temperature detecting means with the ambient temperature supplied from the ambient temperature detecting means; and
the data transmission processing controlling means controls the packetized data transmission bit rate based on the result of the comparison.

9. The apparatus as set forth in claim 1, wherein:
the data transmission processing controlling means controls input of the data;
there is provided a calender storage means having stored therein a target temperature value corresponding to each date and hours;
the temperature monitoring means compares the detected temperature supplied from the internal temperature detecting means with a target temperature corresponding to a date and hours, supplied from the calender storage means; and
the data transmission processing controlling means controls the packetized data transmission bit rate based on the result of the comparison.

10. The apparatus as set forth in claim 1, further comprising:
a data dividing means for dividing the data for a plurality of channels;
a plurality of base-band signal encoding means for diffusion-modulation of the data for the plurality of channels with different diffusion codes, respectively;
a synthesizing means for combining the base-band signals to produce a composite signal;
a transmission signal modulating means for modulation of the composite signal to a transmission signal; and
means for amplifying the transmission signal;
the data transmission processing controlling means controlling the maximum value of amplitude of the composite signal.

11. The apparatus as set forth in claim 10, wherein the temperature monitoring means compares the detected temperature supplied from the internal temperature detecting means with a pre-stored target temperature value; and
the data transmission processing controlling means controls the maximum value of amplitude of the composite signal based on the result of the comparison.

12. The apparatus as set forth in claim 11, wherein the temperature monitoring means produces a signal for raising the upper limit of the maximum amplitude of the composite signal when the detected temperature is lower than the target temperature value or a signal for lowering the upper limit of the maximum amplitude of the composite signal when the detected temperature is higher than the target temperature value.

13. The apparatus as set forth in claim 11, wherein:
there is provided an ambient temperature detecting means;
the temperature monitoring means compares the detected temperature supplied from the internal temperature detecting means with an ambient temperature supplied from the ambient temperature detecting means; and
the data transmission processing controlling means controls the maximum value of amplitude of the composite signal based on the result of the comparison.

14. The apparatus as set forth in claim 11, wherein:
there is provided a calender storage means having stored therein a target temperature value corresponding to each date and hours;
the temperature monitoring means compares the detected temperature supplied from the internal temperature detecting means with a target temperature value corresponding to a date and hours, supplied from the calender storage means; and
the data transmission processing controlling means controls the maximum value of amplitude of the composite signal based on the result of the comparison.

15. The apparatus as set forth in claim 1, further comprising:
a transmission signal modulating means for modulating a base-band signal obtained through encoding of the data to a transmission signal; and
means for amplifying the transmission signal.

16. A portable wireless data transmitter comprising:
a data encoding means;
an internal temperature detecting; and
a temperature monitoring means for controlling the data encoding means correspondingly to a detected temperature supplied from the internal temperature detecting means.

17. The apparatus as set forth in claim 16, wherein:
the temperature monitoring means compares the detected temperature supplied from the internal temperature detecting means with a pre-stored target temperature value; and
the data encoding means controls the encoding bit rate based on the result of the comparison.

18. The apparatus as set forth in claim 17, wherein the temperature monitoring means produces a signal for raising the upper limit of the encoding bit rate when the detected temperature is lower than the target temperature value or a signal for lowering the upper limit of the encoding bit rate when the detected temperature is higher than the target temperature value.

19. The apparatus as set forth in claim 16, wherein:
there is provided an ambient temperature detecting means;
the temperature monitoring means compares the detected temperature supplied from the internal temperature detecting means with an ambient temperature supplied from the ambient temperature detecting means; and
the data encoding means controls the encoding bit rate based on the result of the comparison.

20. The apparatus as set forth in claim 16, wherein:
there is provided a calender storage means having stored therein a target temperature corresponding to each date and hours;
the temperature monitoring means compares the detected temperature supplied from the internal temperature detecting means with a target temperature value corresponding to a date and hours, supplied from the calender storage means; and
the data encoding means controls the encoding bit rate based on the result of the comparison.

21. The apparatus as set forth in claim 16, further comprising:
a transmission signal modulating means for modulating a base-band signal obtained through encoding of the data to a transmission signal; and
means for amplifying the transmission signal.

22. A method for wireless data transmission, comprising steps of:
detecting an internal temperature; and
controlling data transmission processing correspondingly to the detected internal temperature.

23. The method as set forth in claim 22, wherein:
the data is encoded into a base-band signal;
the base-band signal is modulated to a transmission signal; and
the transmission signal is amplified and transmitted to outside.

24. The method as set forth in claim 22, wherein:
the internal temperature is compared with a pre-stored target temperature value; and
the packetized data transmission interval is controlled based on the result of the comparison.

25. The method as set forth in claim 22, wherein:
the internal temperature is compared with the ambient temperature; and
the packetized data transmission interval is controlled based on the result of the comparison.

26. The method as set forth in claim 22, wherein:
the internal temperature is compared with a target temperature value corresponding to a date and hours; and
the packetized data transmission interval is controlled based on the result of the comparison.

27. The method as set forth in claim 22, wherein:
the internal temperature is compared with a pre-stored target temperature value; and
the packetized data transmission bit rate is controlled based on the result of the comparison.

28. The method as set forth in claim 27, wherein:
the internal temperature is compared with the ambient temperature; and
the packetized data transmission bit rate at the time of data input is controlled based on the result of the comparison.

29. The method as set forth in claim 27, wherein:
the internal temperature is compared with a target temperature value corresponding to a date and hours; and
the packetized data transmission bit rate is controlled based on the result of the comparison.

30. The method as set forth in claim 22, wherein:
the data is divided for a plurality of channel;
the data for the plurality of channels are diffusion-modulated with different diffusion signals, respectively;
the maximum value of amplitude of a composite signal produced by combining the diffusion-modulated channel signals is controlled correspondingly to the internal temperature;
the composite signal is modulated to a transmission signal; and
the transmission signal is amplified and transmitted to outside.

31. The method as set forth in claim 30, wherein:
the internal temperature is compared with apre-stored target temperature value; and
the maximum value of amplitude of the composite signal is controlled based on the result of the comparison.

32. The method as set forth in claim 30, wherein:
the internal temperature is compared with the ambient temperature; and
the maximum value of amplitude of the composite signal is controlled based on the result of the comparison.

33. The method as set forth in claim 30, wherein:
the internal temperature is compared with a target temperature value corresponding to a date and hours; and
the maximum value of amplitude of the composite signal is controlled based on the result of the comparison.

34. A method for wireless data transmission comprising steps of:
detecting an internal temperature; and
controlling the data encoding correspondingly to the detected internal temperature.

35. The method as set forth in claim 34, wherein:
the data is encoded to a base-band signal;
the base-band signal is modulated to a transmission signal; and
the transmission signal is amplified and transmitted to outside.

36. The method as set forth in claim 34, wherein:
the internal temperature is compared with a pre-stored target temperature value; and
the encoding bit rate is controlled based on the result of the comparison.

37. The method as set forth in claim 34, wherein:
the internal temperature is compared with the ambient temperature; and
the encoding bit rate is controlled based on the result of the comparison.

38. The method as set forth in claim 34, wherein:
the internal temperature is compared with a target temperature value corresponding to a date and hours; and
the encoding bit rate is controlled based on the result of the comparison.
